# EUROPÄISCHE PATENTSCHRIFT

(11) **EP 2 618 902 B1**
(45) Veröffentlichungstag und Bekanntmachung des Hinweises auf die Patenterteilung: **23.09.2015**
(21) Anmeldenummer: 12740894.6
(22) Anmeldetag: 25.07.2012
(51) Int. Cl.: B01D 3/08, B01L 9/04, F16M 11/00

(54) **ROTATIONSVERDAMPFER**
ROTARY EVAPORATOR
ÉVAPORATEUR ROTATIF

(30) Priorität: 08.10.2011 DE 202011106534 U
(43) Veröffentlichungstag der Anmeldung: 31.07.2013
(73) Patentinhaber: KNF Neuberger GmbH, 79112 Freiburg (DE)
(72) Erfinder: HAUSER, Erwin, 79312 Emmendingen (DE); BECKER, Erich, 79189 Bad Krozingen (DE)
(74) Vertreter: Börjes-Pestalozza, Henrich
(86) Internationale Anmeldenummer: PCT/EP2012/003146
(87) Internationale Veröffentlichungsnummer: WO 2013/050092

(56) Entgegenhaltungen:
- EP-A1- 1 068 903
- WO-A2-2009/018874
- DE-A1- 19 710 745

## Beschreibung

Die Erfindung betrifft einen Rotationsverdampfer mit einem Geräteständer, auf dem ein Führungsturm übersteht, mit einem ein Verdampfungsgefäß aufweisenden Glasaufbau, der zum Anheben und Absenken insbesondere seines Verdampfungsgefäßes an einem Schlitten gehalten ist, der seitlich am Führungsturm verfahrbar ist, sowie mit zumindest einer Fluidleitung, welche mit dem Glasaufbau verbunden ist, wobei der Führungsturm einen in Längserstreckung des Turmes orientierten Kanal aufweist.

Rotationsverdampfer sind bereits in verschiedenen Ausführungen bekannt. Solche Rotationsverdampfer sind zur schonenden Trennung von Flüssigkeitsgemischen und Lösungen unter Nutzung der unterschiedlichen Siedepunkte der Komponenten bestimmt. So können Rotationsverdampfer auch zur Trocknung, zur Lösemittelrückgewinnung und zu ähnlichen Prozessen genutzt werden. Als Verdampferelement dient regelmäßig ein Heizbad, in dem sich ein erhitztes Wasser- oder Ölvolumen befindet. In der erhitzten Wasser oder Ölmenge des Heizbades rotiert ein Verdampferkolben, der in seinem Kolbeninneren die einzudampfende Lösung enthält. Diese Lösung wird auf den erhitzten Kolben-Innenwänden des rotierenden Verdampferkolbens als dünner Flüssigkeitsfilm verteilt, der dort leicht verdunsten kann. Durch die Rotation des Verdampferkolbens wird auch ein Siedeverzug vermieden und in Verbindung mit dem Heizbad eine homogene Temperaturverteilung in dem zu verdampfenden Medium erreicht. Die zusätzlich bewirkte Durchmischung des Heizbades erleichtert die Regelung der effektiven Heiztemperatur wesentlich. Zur Vermeidung hoher Temperaturen, die mit Gefahren für den Anwender verbunden sind und auch ungewollte chemische Reaktionen im Medium hervorrufen können, wird der Verdampfungsprozess durch ein Evakuieren des Prozessraumes unterstützt. Die Verdampferleistung wird durch die Heizbadtemperatur, die Kolbengröße und Rotationsgeschwindigkeit des Verdampferkolbens sowie den eingestellten Vakuumdruck variiert. Aufgrund der allgemeinen Trägheit der Temperaturen von Medium und Prozess wird die Verdampfung bei konstanten Temperaturen primär über den Druck gesteuert. Um den Prozessraum evakuieren zu können, und um an dem benötigten Kühler die erforderlichen Kühlmittelzu- und - abläufe anschließen zu können, ist an dem auf dem Verdampferkolben umfassenden Glasaufbau des Rotationsverdampfers zumindest ein Schlauchanschluss und regelmäßig mehrere Schlauchanschlüsse vorgesehen, die über jeweils eine flexible Schlauchleitung mit einer Vakuumpumpe oder mit einem Kühlmittelzu- oder -ablauf verbunden sind.

In den vergangenen Jahrzehnten wurde die Bedienbarkeit, die Sicherheit und die Automatisierung der vorbekannten Rotationsverdampfer wesentlich verbessert. Verschiedentlich sind jedoch einige Nachteile feststellbar.

Die vorbekannten Rotationsverdampfer weisen einen Geräteständer auf, an dem ein Führungsturm übersteht. Der Führungsturm weist ein im Querschnitt rechteckiges inneres Turmteil auf, das ein, relativ zum inneren Turmteil anheb- und absenkbares äußeres Turmteil umhüllt. An dem äußeren Turmteil des Führungsturmes ist der auch den Verdampferkolben umfassende Glasaufbau gehalten, der durch Anheben und Absenken des äußeren Turmteiles in vertikaler Richtung positionierbar ist. Der Glasaufbau ist über meist mehrere flexible Schlauchleitungen mit einer Vakuumpumpe sowie mit einem Kühlmittelzu- und -abfluß verbunden.

So ist auch aus der US 5 152 375 A bereits ein Rotationsverdampfer mit einem Geräteständer vorbekannt, auf dem ein Führungsturm übersteht. Der vorbekannte Rotationsverdampfer hat einen Glasaufbau mit einem Verdampfungsgefäß, welcher Glasaufbau zum Anheben- und Absenken insbesondere seines Verdampfungsgefäßes an einem Schlitten gehalten ist, der seitlich am Führungstürm verfahrbar ist. Auch bei diesem vorbekannten Rotationsverdampfer ist der Glasaufbau über mehrere flexible Fluidleitungen mit einer Vakuumpumpe sowie mit einem Kühlmittelzu- und -abfluss verbunden.

Aus der EP 1 068 903 A1 ist bereits ein höhenverstellbarer Geräteständer für einen Rotationsverdampfer der eingangs erwähnten Art vorbekannt. Auf dem vorbekannten Geräteständer steht ein Führungsturm über, an dem seitlich ein Schlitten verfahrbar ist. An dem Schlitten ist ein Glasaufbau gehalten, der auch ein Verdampfungsgefäß aufweist. An dem Schlitten ist ein Antriebsmotor vorgesehen, der eine Seiltrommel für einen Seilzug antreibt, mit welchem Seilzug der Schlitten am Führungsturm verfahren werden kann. In einer in Figur 5 der EP 1 068 903 A1 gezeigten Ausführung steht die Seiltrommel über den Schlitten in einen Kanal des Führungsturmes vor. Da auch ein von dem aus EP 1 068 903 A1 vorbekannten Geräteständer gehaltener Glasaufbau über mehrere flexible Fluidleitungen mit einer Vakuumpumpe sowie mit einem Kühlmittelzu- und abfluss verbunden werden muss, besteht das Risiko, dass sich der Anwender des vorbekannten Rotationsverdampfers in diesen Schlauchleitungen unbeabsichtigt verfängt.

Bei den vorbekannten Rotationsverdampfern ist die Länge der Schlauchleitungen großzügig zu bemessen, damit die Schlauchleitungen in jeder Höhe des Glasaufbaus über eine ausreichende Länge verfügen. Die um den Rotationsverdampfer und den an seinem Führungsturm gehaltenen Glasaufbau herum geführten Schlauchleitungen können jedoch beim Handling mit dem Rotationsverdampfer im Wege stehen und das Risiko beinhalten, dass sich der Anwender des Rotationsverdampfers in diesen Schlauchleitungen unbeabsichtigt verfängt. Da häufig auch die Relativposition von innerem und äußerem Turmteil nur geschätzt werden kann, sind die Prozesse und die dazugehörigen Parameter des Rotationsverdampfers eventuell nicht ohne weiteres reproduzierbar.

Aus dem deutschen Gebrauchsmuster DE 93 16 757 Ul kennt man bereits einen Pumpenstand mit einer als Träger dienenden Grundplatte, auf der eine Pumpe, eine Steuereinheit sowie gegebenenfalls weitere Zusatzvorrichtungen befestigt sind. An der Grundplatte ist auch ein Haltearm vorgesehen, an dem ein Vakuumcontroller und/oder ein Abscheider gehalten ist. Die Grundplatte und der Haltearm weisen Höhlungen und Durchbrüche auf, um durch die Grundplatte und den Haltarm nicht nur elektrische Leitungen -, sondern auch pneumatische Verbindungen, wie zum Beispiel Schläuche, hindurchführen zu können. Solche Schläuche können somit von der auf der Grundplatte befestigten Pumpe durch die Grundplatte und den Haltearm hindurch zum oberen freien Ende des Haltearms geführt werden, um den Schlauch dort freiliegend an den Vakuumcontroller anschließen zu können.

Obwohl der aus DE 93 16 757 Ul vorbekannte Pumpenstand bereits seit nahezu zwei Jahrzehnten zum Stand der Technik zählt, hat dieser vorbekannte Stand der Technik die Konstruktion von Rotationsverdampfern nicht beeinflussen können. Bei solchen Rotationsverdampfern werden die erforderlichen Fluidleitungen auch heute noch frei verlegt, um die Hub- und Absenkbewegung des mit diesen Schlauchleitungen verbundenen Glasaufbaus nicht zu beeinträchtigen.

Es besteht daher die Aufgabe, einen Rotationsverdampfer zu schaffen, der einfach und gefahrlosbedienbar ist.

Die erfindungsgemäße Lösung dieser Aufgabe besteht bei dem Rotationsverdampfer der eingangs erwähnten Art darin, dass der Führungsturm aus zumindest zwei Profilabschnitten gebildet ist, die in einer in Längserstreckung des Führungsturmes orientierten Trennlage verbunden sind, dass der Führungsturm wenigstens einen Profilabschnitt aufweist, der als Hohlprofil ausgebildet ist, und dass mindestens ein Hohlprofil-Innenraum wenigstens eines Profilabschnittes den Kanal des Führungsturmes bildet, in dem ein Leitungsabschnitt zumindest einer, mit dem Glasaufbau verbundenen Fluidleitung vorgesehen ist, die in einem Schlauchanschluss mündet oder endet, der an einem bodenseitigen und dem freien Ende des Führungsturmes abgewandten Bereich des Rotationsverdampfers angeordnet ist.

Bei dem erfindungsgemäßen Rotationsverdampfer kann auf einander umhüllende und relativ zueinander anheb- und absenkbare Turmteile verzichtet werden. Stattdessen ist bei dem erfindungsgemäßen Rotationsverdampfer der Glasaufbau an einem Schlitten gehalten, der seitlich am Führungsturm verfahrbar ist. Da der Führungsturm somit stets eine gleichbleibende Turmhöhe hat, ist das Turminnere des Führungsturmes nutzbar, um darin zumindest einen Leitungsabschnitt einer mit dem Glasaufbau verbundenen Schlauchleitung zu führen. Der Führungsturm weist dazu einen in Längserstreckung des Turmes orientierten Kanal auf, in dem der Leitungsabschnitt der zumindest einen, mit dem Glasaufbau verbundenen Fluidleitung vorgesehen ist. Die zumindest eine, mit dem Glasaufbau verbundene Fluidleitung mündet oder endet in einem Schlauchanschluss, der an einem bodenseitigen und dem freien Ende des Führungsturmes abgewandten Bereich des Rotationsverdampfers angeordnet ist. Dort kann die Fluidleitung in üblicher Weise beispielsweise mit einer Vakuumpumpe verbunden werden. Da ein vergleichsweise langer Leitungsabschnitt der zumindest einen Fluidleitung geschützt im Inneren des Führungsturmes geführt ist, und da somit die im Bereich des Glasaufbaus verbleibenden Leitungsabschnitte vergleichsweise kurz gehalten werden können, stehen diese weniger störend im Wege und auch das Risiko eines versehentlichen Verfangens in diesen Leitungsabschnitten ist deutlich reduziert. Unter anderem auch dadurch ist der erfindungsgemäße Rotationsverdampfer einfach und gefahrlos bedienbar.

Um die Herstellung und Montage des erfindungsgemäßen Rotationsverdampfers wesentlich zu vereinfachen, ist vorgesehen, dass der Führungsturm aus zumindest zwei Profilabschnitten gebildet ist, die in einer in Längserstreckung des Führungsturmes orientierten Trennlage vorzugsweise lösbar miteinander verbunden sind. Der Führungsturm weist wenigstens einen Profilabschnitt auf, der als Hohlprofil ausgebildet ist und bei dem mindestens ein Hohlprofil-Innenraum wenigstens eines Profilabschnittes den Kanal des Führungsturmes bildet.

Möglich ist es, eine mit ihrem einen Schlauchende am Glasaufbau angeschlossene flexible Schlauchleitung durch den im Führungsturm vorgesehenen Kanal hindurch zu führen, um das andere Schlauchende dieser Schlauchleitung an dem bodenseitigen Schlauchanschluss anzuschließen. Eine bevorzugte Ausführung gemäß der Erfindung sieht jedoch vor, dass wenigstens ein, im Führungsturm vorgesehener Leitungsabschnitt an seinem, dem bodenseitigen ersten Schlauchanschluss abgewandten Leitungsabschnittsende mit einem zweiten Schlauchanschluss verbunden ist, der an dem freien Endbereich des Führungsturmes angeordnet ist. Bei dieser bevorzugten Ausführungsform ist zwischen dem Glasaufbau und dem zweiten Schlauchanschluss ein vorzugsweise flexibles Schlauchstück vorgesehen. Von dort führt die Fluidleitung über ihren, im Kanal des Führungsturmes angeordneten Leitungsabschnitt zum bodenseitigen Schlauchanschluss.

Möglich ist es, die abzusaugende Luft oder das in einem Kühler benötigte Kühlmittel unmittelbar über den beispielsweise als Hohlprofil-Innenraum ausgebildeten Kanal des Führungsturmes zu führen. Um jedoch verschiedene Leitungen auch über nur einen Kanal geschützt zu führen, ist es zweckmäßig, wenn wenigstens ein im Kanal des Führungsturmes vorgesehener Leitungsabschnitt der zumindest einen Fluidleitung als eine im Kanal geführte Schlauchleitung ausgebildet ist und wenn dieser Leitungsabschnitt an seinen Schlauchleitungsenden mit dem ersten und gegebenenfalls dem zweiten Schlauchanschluss verbunden ist.

Eine bevorzugte Weiterbildung gemäß der Erfindung sieht vor, dass zumindest zwei Profilabschnitte des Führungsturmes einen Hohlraum umgrenzen, der an einem Führungsschlitz offen ausgebildet ist, dass in dem Hohlraum eine Schlittenführung vorgesehen ist, an welcher der Schlitten verfahrbar geführt ist, und dass der Schlitten zumindest einen, den Führungsschlitz durchsetzenden Verbindungsarm trägt, der mit dem Glasaufbau verbunden ist. Bei dieser weiterbildenden Ausführungsform ist die Schlittenführung geschützt in einem Hohlraum untergebracht, den zumindest zwei Profilabschnitte umgrenzen. An der im Hohlraum befindlichen Schlittenführung ist ein Schlitten geführt, der zumindest einen Verbindungsarm trägt, der mit dem Glasaufbau verbunden ist. Der zumindest eine Verbindungsarm durchsetzt dazu einen Führungsschlitz, der seitlich am Führungsturm vorgesehen ist.

Eine konstruktiv besonders einfache und vergleichsweise leicht herstellbare Ausführungsform gemäß der Erfindung sieht vor, dass der Führungsschlitz in der Trennlage zwischen wenigstens zwei Profilabschnitten angeordnet und von benachbarten Schmalrändern dieser Profilabschnitte umgrenzt ist.

Um die Reproduzierbarkeit eines Geräteaufbaus zu erleichtern und um damit die Handhabung des erfindungsgemäßen Rotationsverdampfers zu vereinfachen, ist es vorteilhaft, wenn der Schlitten mittels einer Skalierung positionierbar ist, die eine am Außenumfang des Führungsturmes vorgesehene Skala aufweist, die mit einer am Schlitten befindlichen Anzeige zusammenwirkt.

Eine bevorzugte Weiterbildung gemäß der Erfindung sieht vor, dass der Schlitten von einer Hebeposition gegen eine Rückstellkraft in eine Absenkstellung verfahrbar ist, und dass zum Verfahren des Schlittens eine gegenüber dem Führungsturm ortsfeste Seilwinde vorgesehen ist, die zumindest ein aufwickelbares Seil hat, das am Schlitten gehalten oder geführt ist.

Gemäß diesem Erfindungsvorschlag ist zum Verfahren des Schlittens am Führungsturm eine gegenüber dem Schlitten ortsfeste Seilwinde vorgesehen, die zumindest ein aufwickelbares Seil hat, das am Schlitten gehalten oder geführt ist. Die als Hubantrieb verwendete Seilwinde ist vergleichsweise leise, was im Laborbetrieb von besonderem Vorteil ist. Da bei dieser Seilwinde die Kraftübertragung per Seil erfolgt, ist eine weitgehende Entkopplung des gegebenenfalls auch vibrationsstarken Motors von der übrigen Struktur des Rotationsverdampfers möglich. Die Seilwinde lässt sich an geeigneter Stelle platzieren, wobei das Seil über zumindest eine Umlenkung zum Schlitten geführt werden kann. Das Seil ist derart am Schlitten gehalten oder geführt, dass durch das Auf- oder Abwickeln des Seiles und Verkürzen oder Verlängern des über die Seilwinde überstehenden Seilabschnitts der Schlitten von der Rückstellkraft angehoben oder gegen die Rückstellkraft abgesenkt werden kann. Bei einem Stromausfall gibt die Seilwinde das darauf aufgewickelte Seil derart frei, dass die Rückstellkraft den Schlitten in die Hebeposition bewegen kann; da der Schlitten bei einem Stromausfall somit automatisch in seine Hebeposition bewegt wird, in welcher sich das Verdampfungsgefäß mit Abstand über dem Heizbad befindet, wird der im Verdampfungsgefäß ablaufende Prozess vorsorglich unterbrochen und eine unkontrollierte Überhitzung der zu verdampfenden Flüssigkeit mit Sicherheit unterbunden.

Um die Geschwindigkeit, mit welcher der Schlitten am Führungsturm verfahren wird, an die Drehzahl des für die Seilwinde verwendeten Antriebsmotors anpassen zu können und/oder um auch einen vergleichsweise schweren Glasaufbau mit Hilfe eines kleinen Antriebsmotors am Führungsturm gut verfahren zu können, ist es vorteilhaft, wenn das zumindest eine Seil der Seilwinde über einen Flaschenzug geführt ist.

Um die Vibrationen des Antriebsmotors nicht auf die Struktur des Rotationsverdampfers zu übertragen, sieht eine bevorzugte Ausführungsform gemäß der Erfindung vor, dass die Seilwinde einen Antriebsmotor hat, der federnd oder schwingungsdämpfend gelagert ist.

Damit der Antriebsmotor die von der Rückstellkraft bewirkte Rückstellbewegung des Schlittens im Falle einer Stromunterbrechung nicht behindert, ist es vorteilhaft, wenn die Seilwinde einen Antriebsmotor hat, der als ein, im stromlosen Zustand momentfreier elektrischer Antriebsmotor ausgebildet ist.

Die Verfahrbewegung des Schlittens und dessen Positionierung in einer definierten Hubhöhe wird erleichtert, wenn die Seilwinde einen Antriebsmotor hat, der als Schrittmotor ausgebildet ist.

Eine kompakte und vorteilhafte Ausführungsform gemäß der Erfindung sieht vor, dass zumindest eine Gasdruckfeder als Rückstellkraft vorgesehen ist.

Die von der Gasdruckfeder ausgeübte Rückstellkraft kann den Schlitten auch im Falle einer Stromunterbrechung in eine definierte Hebeposition verfahren und anheben, wenn die zumindest eine Gasdruckfeder den Schlitten in der Hebeposition gegen einen Schiebeanschlag drückt.

Weitere Merkmale der Erfindung ergeben sich aus der folgenden Beschreibung eines erfindungsgemäßen Ausführungsbeispiels in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen in einer perspektivischen Gesamtdarstellung gezeigten Rotationsverdampfer, der einen Geräteständer hat, an dem ein Führungsturm übersteht, wobei an dem Führungsturm seitlich ein als Halterung dienender Schlitten verfahrbar ist, der einen Glasaufbau mit einem, in ein Temperiergefäß eintauchbaren Verdampfungsgefäß trägt, und wobei dem Verdampfungsgefäß ein Rotationsantrieb zugeordnet ist, der das Verdampfungsgefäß im Temperiergefäß um seine Längsachse drehen lässt,
- Fig. 2: den Führungsturm des in Figur 1 gezeigten Rotationsverdampfers in einer perspektivischen Querschnittsdarstellung,
- Fig. 3: den in einer schematisierten Einzelteildarstellung gezeigten und im Führungsturm angeordneten Hubantrieb, der zum Verfahren des als Halterung dienenden Schlittens am Führungsturm bestimmt ist,
- Fig. 4: den in einem Längsschnitt dargestellten Schlitten, der am Führungsturm verfahrbar ist und der den Glasaufbau trägt, wobei am Schlitten ein um eine horizontale Schwenkachse verschwenkbarer Rotationsantrieb vorgesehen ist, mit dem das Verdampfungsgefäß des Glasaufbaus im Temperiergefäß des Rotationsverdampfers rotierbar ist,
- Fig. 5: den Führungsturm aus Figur 2 bis 4 in einer perspektivischen Detailansicht im Bereich des Schlittens, wobei eine Skalierung am Führungsturm zur Anzeige der Hubhöhe und eine Skalierung am Schlitten zur Anzeige des für den Rotationsantrieb gewählten Schwenkwinkels zu erkennen sind,
- Fig. 6: den Rotationsantrieb aus Figur 4 in einem Längsschnitt, wobei der Rotationsantrieb eine drehantreibbare Nabe hat, die eine als Glashohlwelle ausgebildete Dampfdurchführung durchsetzt, wobei die Glashohlwelle an ihrem einen Wellenende das Verdampfungsgefäß trägt und mit ihrem anderen Wellenende in einem, zu einem Kühler führenden Anschlussstutzen mündet, und wobei die Drehbewegung der drehantreibbaren Nabe des Rotationsantriebs auf die Glashohlwelle mittels eines hülsenförmigen Klemmeinsatzes übertragen wird, der auf die Glashohlwelle aufgeschoben ist,
- Fig. 7: den Rotationsantrieb aus Figur 4 und 6 in einem Detail-Längsschnitt im Bereich des auf die Glashohlwelle aufgeschobenen Klemmeinsatzes,
- Fig. 8: den Klemmeinsatz aus Figur 6 und 7 in einer perspektivischen Darstellung,
- Fig. 9: die die Nabe des Rotationsantriebes durchsetzende Glashohlwelle im Bereich eines als Gleitringdichtung dienenden Dichtringes, welcher Dichtring mit einem äußeren Einspannrand zwischen dem kühlerseitigen Anschlussstutzen und einem Antriebsgehäuse des Rotationsantriebs eingespannt ist und mit einer inneren Ringzone dichtend an der rotierenden Glashohlwelle anliegt,
- Fig. 10: den Dichtring aus Figur 9 in einer perspektivischen Darstellung, und
- Fig. 11: den Rotationsverdampfer aus Figur 1 in einer Detaildarstellung im Bereich seiner als Fernbedienung ausgebildeten Bedienelemente.

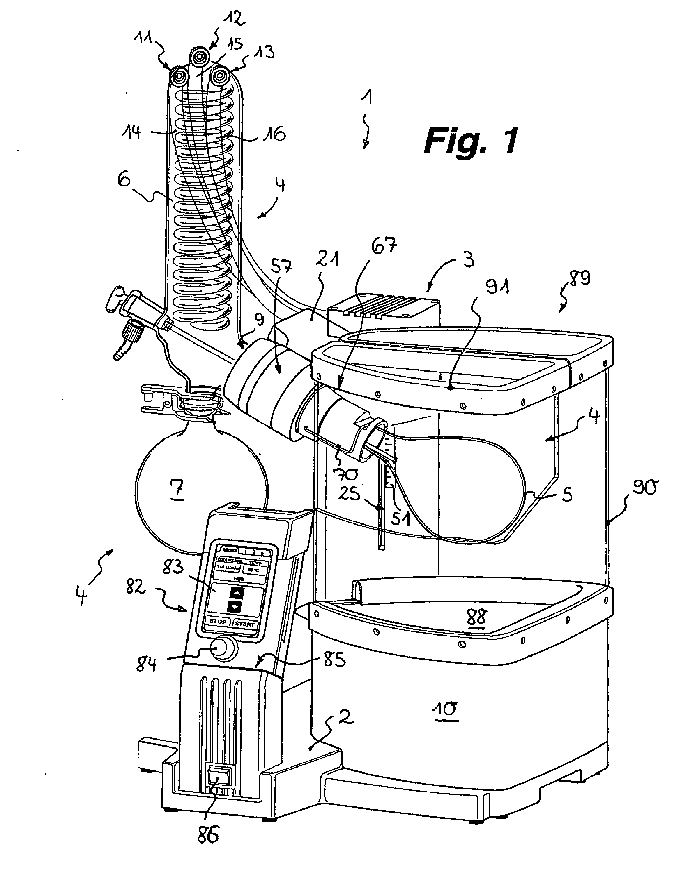

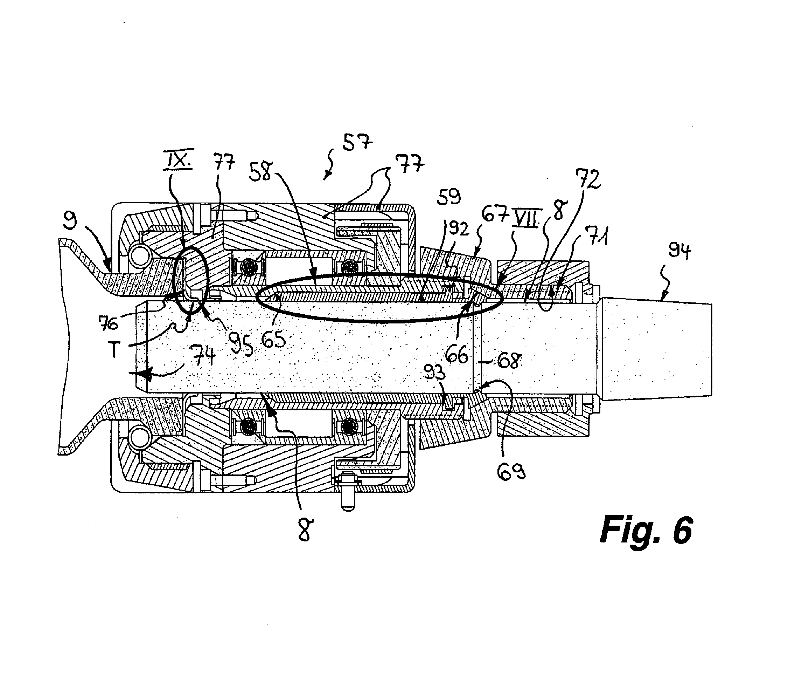

In Figur 1 ist ein Rotationsverdampfer 1 in einer perspektivischen Ansicht dargestellt. Der Rotationsverdampfer 1 hat einen Geräteständer 2, der die Struktur des Rotationsverdampfers trägt. Auf dem Geräteständer 2 steht ein Führungsturm 3 über, der eine vertikal orientierte Längsachse hat. Der Rotationsverdampfer 1 weist einen Glasaufbau 4 auf, der ein hier als Verdampferkolben ausgebildetes Verdampfungsgefäß 5, einen Kühler 6 sowie ein mit dem Kühler 6 lösbar verbundenes Auffanggefäß 7 umfasst. Dabei ist das Verdampfungsgefäß 5 an einer als Dampfdurchführung dienenden und in den Figuren 6, 7 und 9 näher dargestellten Glashohlwelle 8 gehalten, die an ihrem dem Verdampfungsgefäß 5 abgewandten Wellenende in einem Anschlussstutzen 9 des Kühlers 6 mündet.

Der Rotationsverdampfer 1 weist ein hier als Heizbad ausgebildetes Temperiergefäß 10 auf, in welches das Verdampfungsgefäß 5 bereichsweise eintaucht. Um das Verdampfungsgefäß 5 mit einem Teilbereich im Temperiergefäß 10 positionieren zu können und um den Verdampfungsprozess durch Entnahme des Verdampfungsgefäßes 5 aus dem Temperiergefäß 10 bei Bedarf unterbrechen zu können, ist der Glasaufbau 4 und mit ihm das Verdampfungsgefäß 5 am Führungsturm 3 verfahrbar gehalten.

In dem hier als Heizbad ausgebildeten Temperiergefäß 10 befindet sich beispielsweise ein erhitztes Wasser- oder Ölvolumen. In der erhitzten Wasser- oder Ölmenge des Temperiergefäßes 10 rotiert das Verdampfungsgefäß 5, das in seinem kolbenförmigen Innenraum die einzudampfende Lösung enthält. Diese Lösung wird auf den erhitzten Gefäß-Innenwänden des rotierenden Verdampfungsgefäßes 5 als dünner Flüssigkeitsfilm verteilt, der dort leicht verdunsten kann. Durch die Rotation des Verdampfungsgefäßes 5 wird auch ein Siedeverzug vermieden und in Verbindung mit dem im Temperiergefäß 10 befindlichen Heizbad 10 eine homogene Temperaturverteilung in dem zu verdampfenden Medium erreicht. Die zusätzlich bewirkte Durchmischung des Heizbades erleichtert die Regelung der effektiven Heiztemperatur wesentlich. Zur Vermeidung hoher Temperaturen, die mit Gefahren für den Anwender verbunden sind und auch ungewollte chemische Reaktionen im Medium hervorrufen können, wird der Verdampfungsprozess durch ein Evakuieren des Prozessraumes unterstützt. Die Verdampferleistung wird durch die Heizbadtemperatur, die Größe des Verdampfungsgefäßes 5 und dessen Rotationsgeschwindigkeit sowie den eingestellten Vakuumdruck variiert. Aufgrund der allgemeinen Trägheit der Temperaturen von Medium und Prozess wird die Verdampfung bei konstanten Temperaturen primär über den Druck gesteuert. Um den Prozessraum evakuieren zu können und um einen Kühlmittelzu- und -abfluß 6 zu bewerkstelligen, ist an dem auch das Verdampfungsgefäß 5 umfassenden Glasaufbau des Rotationsverdampfers zumindest ein Schlauchanschluss und regelmäßig mehrere Schlauchanschlüsse 11, 12, 13 vorgesehen, die über jeweils eine flexible Schlauchleitung 14, 15, 16 mit einer Vakuumpumpe beziehungsweise mit dem Kühlmittelzu- und -abfluß verbunden sind.

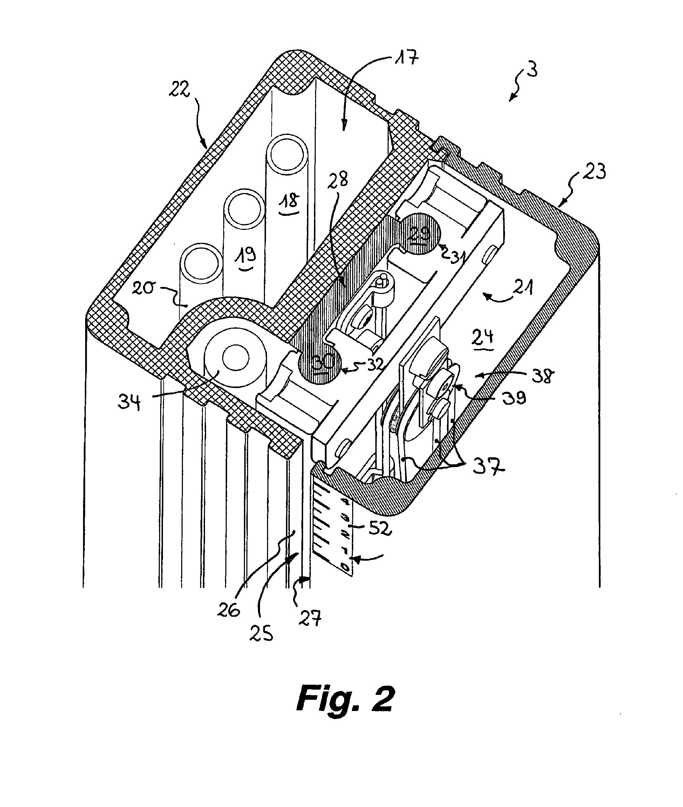

Aus der perspektivischen Querschnittsdarstellung in Figur 2 wird deutlich, dass der Führungsturm 3 einen in seiner Längserstreckung orientierten Kanal 17 aufweist, in dem ein Leitungsabschnitt zumindest einer mit dem Glasaufbau 4 verbundenen Fluidleitung vorgesehen ist. Die zumindest eine Fluidleitung endet in einem ihr zugeordneten, hier aber nicht weiter dargestellten Schlauchanschluss, der an einem bodenseitigen und dem freien Ende des Führungsturmes 3 abgewandten Bereich des Rotationsverdampfers angeordnet ist. Da somit ein vergleichsweise langer Leitungsabschnitt der zumindest einen Fluidleitung im Kanal 17 des Führungsturmes 3 geführt ist, kann der außerhalb des Führungsturmes 3 frei verlegte und hier als Schlauchleitung 14, 15 oder 16 ausgebildete Leitungsabschnitt dieser Fluidleitung vergleichsweise kurz gehalten werden. Das Risiko eines versehentlichen Verfangens in diesen freiverlegten Schlauchleitungen 14, 15, 16 ist damit minimiert. Da die zumindest eine Fluidleitung innerhalb des Führungsturmes 3 nach unten geführt wird, können die Anschlüsse dieser Fluidleitungen an unbewegten Teilen der Struktur im bodenseitigen und dem freien Ende des Führungsturmes 3 abgewandten Bereich des Rotationsverdampfers 1 angeordnet werden. Bei dem hier dargestellten Rotationsverdampfer sind die Anschlüsse der Fluidleitungen in der Bodenplatte des Geräteständers 2 angeordnet.

Um im Kanal 17 des Führungsturmes 3 beispielsweise die zu einer Vakuumpumpe führende Fluidleitung sowie die als Kühlmittelzu- und -abfluß vorgesehenen Fluidleitungen und somit mehrere Fluidleitungen führen zu können, ist vorgesehen, dass die im Kanal geführten Leitungsabschnitte als Schlauchleitungen 18, 19, 20 ausgebildet sind. Dabei sind die im Kanal 17 geführten und als Leitungsabschnitt dienenden Schlauchleitungen 18, 19, 20 auch an ihrem dem bodenseitigen ersten Schlauchanschluss abgewandten Leitungsabschnittsende mit einem zweiten, hier ebenfalls nicht dargestellten Schlauchanschluss verbunden, der an dem freien Endbereich des Führungsturmes 3 angeordnet ist.

Um den Glasaufbau 4 in vertikaler Richtung verfahren zu können, und um dessen Verdampfungsgefäß 5 in das Temperiergefäß 10 absenken sowie aus dem Temperiergefäß 10 auch wieder anheben zu können, ist der Glasaufbau an einer als Schlitten ausgebildeten oder einen Schlitten 21 aufweisenden Halterung gehalten. Der Schlitten 21 ist seitlich am Führungsturm 3 verfahrbar. Da der Führungsturm 3 somit unbewegt bleibt, können die beim Anheben und Absenken des Verdampfungsgefäßes 5 bewegten Teile minimiert werden.

Der Führungsturm 3 ist aus zumindest zwei Profilabschnitten 22, 23 gebildet, die in einer in Längserstreckung des Führungsturmes 3 orientierten Trennlage vorzugsweise lösbar miteinander verbunden sind. Dabei weist der Führungsturm 3 einen Profilabschnitt 22 auf, der als Hohlprofil ausgebildet ist, dessen zumindest einer Hohlprofil-Innenraum den Kanal 17 des Führungsturmes 3 bildet. Die Profilabschnitte 22, 23 des Führungsturmes 3 umgrenzen einen Hohlraum 24, der an einem in vertikaler Richtung orientierten Führungsschlitz 25 offen ausgebildet ist. Der Führungsschlitz 25 ist in der Trennlage zwischen den Profilabschnitten 22, 23 angeordnet und von den benachbarten Schmalrändern 26, 27 dieser Profilabschnitte 22, 23 umgrenzt. Im Hohlraum 24 ist die dem Schlitten 21 zugeordnete Schlittenführung 28 vorgesehen. Diese Schlittenführung 28 weist zwei, quer zur Führungsrichtung voneinander beabstandete und im Querschnitt runde Führungsstäbe 29, 30 auf, die von Führungslöchern 31, 32 im Schlitten 21 umgriffen werden.

Der Schlitten 21 trägt zumindest einen Verbindungsarm 33, der den Führungsschlitz 25 durchsetzt und mit dem Glasaufbau 4 verbunden ist. Der Schlitten 21 ist von einer Hebeposition gegen die Rückstellkraft zumindest einer Gasdruckfeder 34 in eine Absenkstellung verfahrbar. Zum Verfahren des Schlittens 21 ist eine als Hubantrieb dienende Seilwinde 35 vorgesehen, die ortsfest gegenüber dem Führungsturm 3 an der Struktur des Rotationsverdampfers 1 gehalten ist. Die Seilwinde 35 weist ein, auf eine Seiltrommel 36 aufwickelbares Seil 37 auf, das am Schlitten 21 derart geführt ist, dass durch Auf- und Abwickeln des Seiles 37 und Verkürzen und Verlängern des über die Seilwinde 35 überstehenden Seilabschnitts der Schlitten 21 von der Rückstellkraft angehoben oder gegen die Rückstellkraft abgesenkt werden kann. Bei einem Stromausfall gibt die Seilwinde 35 das darauf aufgewickelte Seil 37 derart frei, dass die Rückstellkraft den Schlitten 21 in die Hebeposition bewegen kann; da der Schlitten 21 bei einem Stromausfall somit automatisch in seine Hebeposition bewegt wird, in welcher sich das Verdampfungsgefäß 5 mit Abstand über dem Temperiergefäß 10 befindet, wird der im Verdampfungsgefäß 5 ablaufende Prozess vorsorglich unterbrochen und eine unkontrollierte Überhitzung der zu verdampfenden Flüssigkeit mit Sicherheit unterbunden.

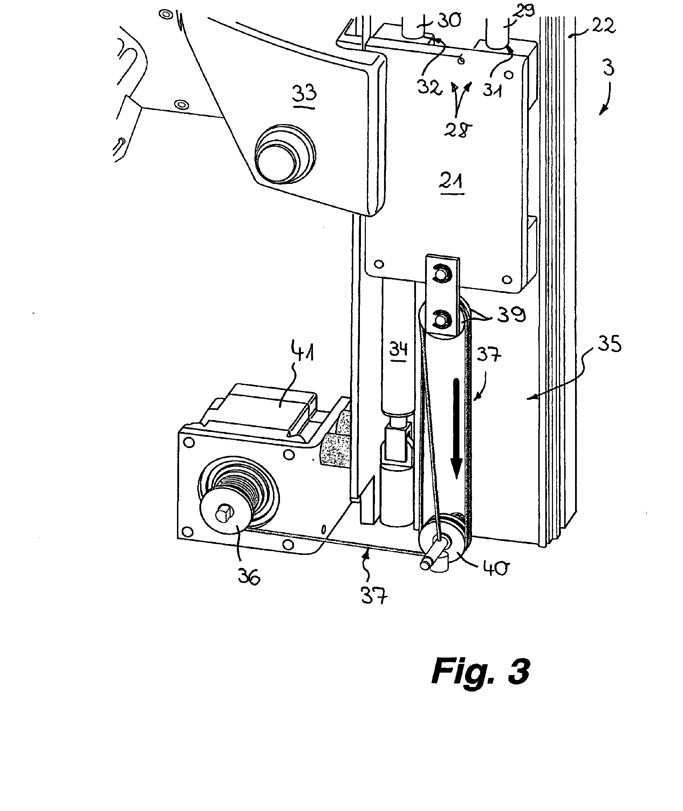

In Figur 3 ist erkennbar, dass das Seil 37 der Seilwinde 35 über einen Flaschenzug 38 geführt ist, welcher Flaschenzug 38 voneinander beabstandete Umlenkrollen 39, 40 hat. Der Flaschenzug 38 weist hier eine Übersetzung auf. Die Seilwinde 35 hat einen Schrittmotor als elektrischen Antrieb 41. Da dieser Schrittmotor ein vergleichsweise hohes Drehmoment hat, ist ein zusätzliches Getriebe überflüssig. Da die Antriebswelle des elektrischen Antriebs 41 bei abgeschaltetem Motor nahezu momentfrei ist, kann auch bei einer Stromunterbrechung eine sichere Notabschaltung gewährleistet werden, indem die wenigstens eine als Rückstellkraft dienende Gasdruckfeder 34 den Schlitten 21 in die obere Hebeposition bewegt. Dabei drückt die zumindest eine Gasdruckfeder 34 den Schlitten 21 in der oberen Hebeposition gegen einen oberen Endanschlag. Mit Hilfe eines einstellbaren unteren Anschlages kann die Eintauchtiefe des Verdampfungsgefäßes 5 im Heizbad des Temperiergefäßes 10 in Abhängigkeit von der Größe und Füllmenge des gewählten Verdampfungsgefäßes 5 eingestellt werden. Mit Hilfe der Schrittsteuerung des elektrischen Antriebes 41 lässt sich der Schlitten 21 in jeder gewünschten Hubposition verfahren. Dabei dient der Schrittsteuerung des elektrischen Antriebes 41 der obere Endanschlag als Referenz.

Der durch die Seilwinde 35, den elektrischen Antrieb 41 und den Flaschenzug 38 gebildete Hubmechanismus, der zu Beginn und Ende des Prozesses dem Absenken und Ausheben des Verdampfungsgefäßes 5 sowie der Feineinstellung seiner Eintauchtiefe im Heizbad dient, zeichnet sich durch einen vergleichsweise langen Hubweg aus, der auch bei der Verwendung großer Verdampfungsgefäße 5 deren vollständiges Ausheben aus dem Temperiergefäß 10 sicherstellt. Die Drehzahl des der Seilwinde 35 zugeordneten elektrischen Antriebes 41 ist variabel und weist zumindest zwei Drehzahlstufen auf. Während eine hohe Drehzahl eine hohe Fahrgeschwindigkeit des Schlittens 21 zum raschen Absenken oder Ausheben des Verdampfungsgefäßes 5 sicherstellt, wird mit einer demgegenüber geringeren Drehzahl eine niedrigere Geschwindigkeit des Schlittens 21 erreicht, die zur Feineinstellung der Eintauchtiefe des Verdampfungsgefäßes 5 bestimmt ist.

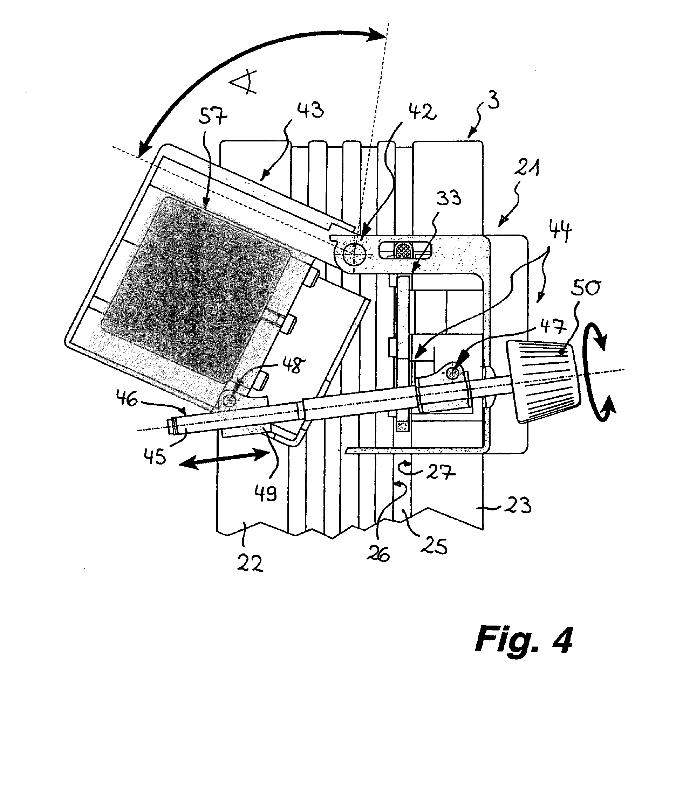

Aus Figur 4 wird deutlich, dass der Schlitten 21 hier Bestandteil einer Halterung ist, die zur Befestigung des Glasaufbaus 4 am Schlitten 21 dient. Der in den Figuren 1 und 6 näher dargestellte Glasaufbau 4 und insbesondere dessen Verdampfungsgefäß 5 ist an der Halterung um eine horizontale Schwenkachse 42 verschwenkbar gehalten. Die Halterung weist dazu ein hier als Schlitten 21 ausgebildetes Halteteil auf, an dem ein mit dem Verdampfungsgerät 5 verbindbares Trageteil 43 um die horizontale Schwenkachse 42 verschwenkbar gehalten ist. Zum Einstellen und Festlegen der gewählten Schwenkposition ist ein Spindeltrieb 44 vorgesehen, der eine Stellspindel 45 mit selbsthemmendem Spindelgewinde 46 hat. Durch Drehen an dieser Stellspindel 45 kann der Schwenkwinkel zwischen dem als Schlitten 21 ausgebildeten Halteteil und dem Trageteil 43 der Halterung verändert und die Schwenkposition eines am Trageteil 43 befestigten Verdampfungsgefäßes 5 variiert werden. Da die Stellspindel 45 ein selbsthemmendes Spindelgewinde 46 hat, ist eine zusätzliche und gegebenenfalls auch versehentlich gelöste Sicherung nicht notwendig. Der Spindeltrieb 44 erlaubt es, den Rotationsverdampfer 1 an die unterschiedlichen Abmessungen der verschiedenen Verdampfungsgefäße anzupassen. Das Trageteil 43 der Halterung trägt den gesamten Glasaufbau 4, dessen Schwerpunkt weit außermittig liegt. Ohne die Selbsthemmung des Spindelgewindes 46 bestände die Gefahr, dass der Glasaufbau beim Lösen einer alternativen Arretierung ungebremst in den unteren Anschlag fällt und bricht, wobei bei dem unter Vakuum stehenden Glasaufbau zusätzlich eine Implusionsgefahr bestehen könnte.

In Figur 4 ist erkennbar, dass die Stellspindel 45 an dem als Schlitten 21 ausgebildeten Halteteil und am Trageteil 43 vorzugsweise um eine horizontale Schwenkachse 47, 48 verschwenkbar gehalten ist. Die Stellspindel 45, die an dem als Schlitten 21 ausgebildeten Halteteil schwenkbar, aber in axialer Richtung unverrückbar gelagert ist, wirkt mit einer Spindelmutter 49 zusammen, die am Trageteil 43 um die Schwenkachse 48 verschwenkbar gehalten ist. An ihrem einen Spindelende weist die Stellspindel 45 ein Stellrad 50 auf, das als Handhabe dient. Über die Auswahl des Gewindetyps des Stellgewindes 46 und der Steigung können Verstellgeschwindigkeit und Kraftaufwand optimiert werden. Da das Stellgewinde 46 selbsthemmend ausgebildet ist, ist keine weitere Arretierung erforderlich, die andernfalls beim Lösen die Gefahr in sich birgt, dass der Glasaufbau versehentlich in den Anschlag fällt und bricht. Der Spindeltrieb 44, mit dem der Kippwinkel des Verdampfungsgefäßes 5 stufenlos verändert werden kann, ist am Stellrad 50 auch mit nur einer Hand betätigbar. In Verbindung mit der variablen Eintauchtiefe des Verdampfungsgefäßes 5 in das Temperiergefäß 10 und der weiter unten noch näher beschriebenen Verschiebbarkeit des Temperiergefäßes 10 erlaubt die in Figur 4 gezeigte Schwenkmechanik, dass ein breites Spektrum unterschiedlich großer Verdampfungsgefäße 5 bei veränderlicher Füllmenge eingesetzt werden kann.

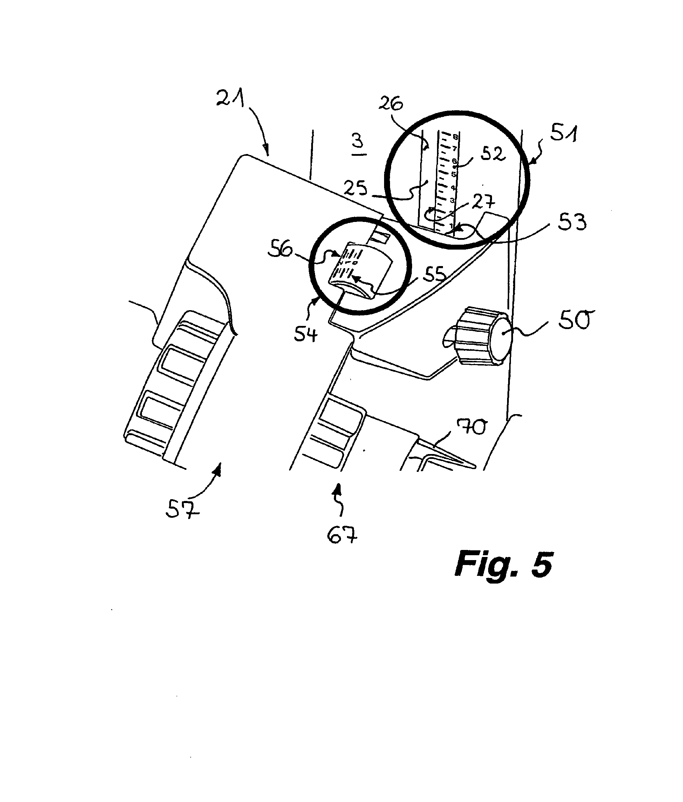

Aus einem Vergleich der Figuren 1 und 5 wird deutlich, dass der am Führungsturm 3 in vertikaler Richtung verfahrbare Schlitten 21 mittels einer Skalierung 51 positionierbar ist, die eine am Außenumfang des Führungsturmes 3 vorgesehene Skala 52 aufweist, welche mit einer am Schlitten 21 befindlichen Anzeige zusammenwirkt. Während die Skala 52 an dem zum Führungsschlitz 25 hin benachbarten außenseitigen Wandungsrandbereich des Führungsturmes 3 angeordnet ist, dient die benachbarte Kante 53 des Schlittens 21 als Anzeige der jeweiligen Hubhöhe.

Zum Positionieren des Trageteiles 43 ist eine weitere Skalierung 54 vorgesehen, die zwischen dem als Halteteil dienenden Schlitten 21 und dem Trageteil 43 vorgesehen ist. Auch diese Skalierung 54 weist eine Skala 55 auf, die hier am Schlitten 21 vorgesehen ist. Dieser Skala 55 ist eine Anzeige zugeordnet, die am Trageteil 43 angeordnet ist. Die Anzeige ist hier durch die benachbarte Kante 56 des Trageteils 43 gebildet. Mit Hilfe der Skalierung 54 lässt sich der jeweilige Schwenkwinkel des mittels der Halterung am Führungsturm 3 gehaltenen Glasaufbaus 4 messen. Die Skalierungen 51, 54 erleichtern die Reproduzierbarkeit eines Versuchsaufbaus wesentlich und begünstigen die einfache Handhabung des hier dargestellten Rotationsverdampfers 1.

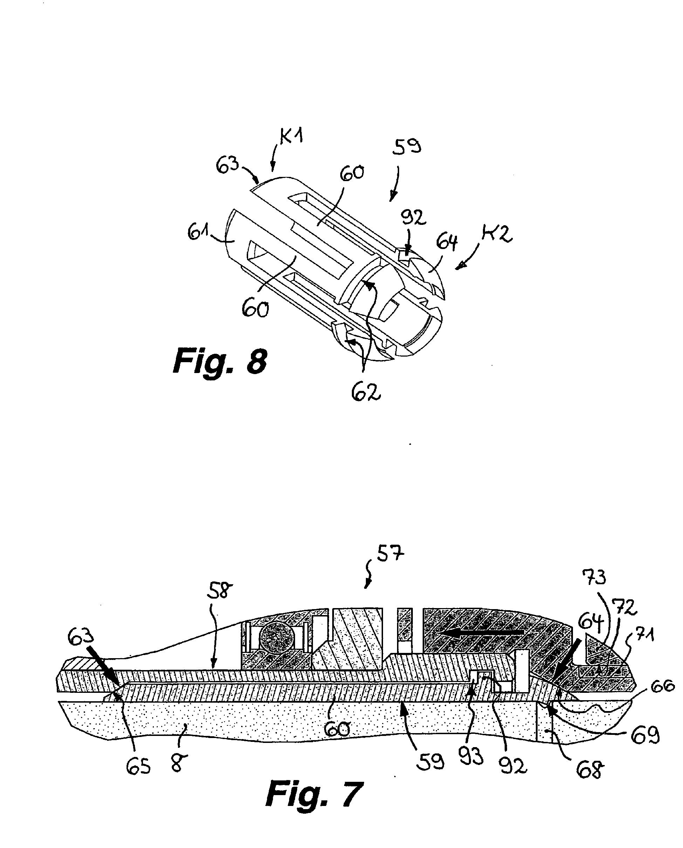

In Figur 6 ist der Rotationsverdampfer 1 in einem Detail-Längsschnitt im Bereich seines am Trageteil 43 der Halterung vorgesehenen Rotationsantriebes 57 dargestellt. Der Rotationsantrieb 57 weist eine Nabe 58 auf, die mittels eines elektrischen Antriebsmotors drehantreibbar ist. Der nicht weiter gezeigte Antriebsmotor des Rotationsantriebs 57 ist hier als bürstenloser Gleichstrommotor mit Zahnriemen-Übersetzung ausgestaltet. Um die Rotationsbewegung der Nabe 58 auf die das Verdampfungsgefäß 5 tragende Glashohlwelle 8 übertragen zu können, ist auf diese Glashohlwelle 8 der in den Figuren 7 und 8 näher dargestellte Klemmeinsatz 59 aufgeschoben. Der zum Verklemmen der Glashohlwelle 8 in der Nabe 58 bestimmte Klemmeinsatz 59 hat eine hülsenartige Grundform. Der Klemmeinsatz 59 weist dazu in Längsrichtung orientierte Stützstäbe 60 auf, die über in Umfangsrichtung des Klemmeinsatzes 59 orientierte Verbindungsstege 61, 62 miteinander verbunden sind. Die Verbindungsstege 61, 62 verbinden wechselweise die auf der einen oder die auf der anderen Seite des Klemmeinsatzes 59 angeordneten Stegenden benachbarter Stützstege 60 derart, dass ein jeder Stützsteg 60 mit seinem einen benachbarten Stützsteg über einen, auf der einen Seite des Klemmeinsatzes 59 angeordneten und in die eine Umfangsrichtung abstehenden Verbindungssteg 61 verbunden ist, während er mit dem anderen benachbarten Stützsteg über einen auf der anderen Seite des Klemmeinsatzes 59 gelegenen und in die entgegengesetzte Umfangsrichtung abstehenden Verbindungssteg 62 verbunden ist. Dabei bilden die an den gegenüberliegenden Enden des Klemmeinsatzes 59 vorgesehene Verbindungsstege 61, 62 voneinander beabstandete Klemmabschnitte K1 und K2 des Klemmeinsatzes 59. Die die Klemmabschnitte K1 und K2 bildenden Verbindungsstege 61, 62 verjüngen sich zu den freien Enden des Klemmeinsatzes 59 hin derart, dass die Klemmabschnitte K1 und K2 jeweils zumindest eine relativ zur Längsachse des Klemmeinsatzes 59 abgeschrägte Klemmschräge 63, 64 tragen, die mit ihnen zugeordneten Gegenschrägen 65 beziehungsweise 66 des Rotationsantriebes 1 in der Weise zusammenwirken, dass die Klemmabschnitte K1 und K2 durch axiale Druckbeaufschlagung des Klemmeinsatzes 59 gegen die Glashohlwelle 8 gedrückt werden. Da der Klemmeinsatz 59 durch die Stützstege 60 und die wechselweise an den gegenüberliegenden Endbereichen der Stützstege 60 vorgesehenen Verbindungsstege 61, 62 eine schlaufenförmige oder meanderförmige Außenkontur hat und da sich diese Außenkontur des Klemmeinsatzes 59 bei Bedarf auf einfache Weise im Umfang weiten lässt, kann der Klemmeinsatz 59 bequem auf der Glashohlwelle 8 positioniert werden.

Aus Figur 6 und dem Detail-Längsschnitt in Figur 7, der den mit VII gekennzeichneten Bereich in Figur 6 zeigt, wird deutlich, dass der Klemmeinsatz 59 von der dem Verdampfungsgefäß 5 zugewandten Seite der Nabe 58 aus in diese bis zu einem als Gegenschräge 65 ausgebildeten Ringabsatz am Innenumfang der Nabe 58 einsetzbar ist, und dass zur axialen Druckbeaufschlagung des Klemmeinsatzes 59 auf die Nabe 58 ein Spannschraubring 67 lösbar aufschraubbar ist, der den über die Nabe 58 vorstehenden Klemmabschnitt K2 des Klemmeinsatzes 59 mit einer am Innenumfang des Spannschraubringes 67 vorgesehenen Gegenschräge 66 beaufschlagt.

Da der Klemmeinsatz 59 durch die Stützstege 60 und die wechselweise an den gegenüberliegenden Endbereichen des Klemmeinsatzes 59 vorgesehenen Verbindungsstege 61, 62 eine schlaufenförmige oder meanderförmige Außenkontur hat und da sich diese Außenkontur des Klemmeinsatzes 59 bei Bedarf auf einfache Weise im Umfang weiten lässt, kann der Klemmeinsatz 59 bequem auf der Glashohlwelle 8 positioniert werden. Die Flexibilität des Klemmeinsatzes 59 wird durch die axial verlaufenden schmalen Stützstege 60 und die sie verbindenden Verbindungsstege 61, 62 erreicht. In den Bereichen der Kraftübertragung, nämlich in den Klemmabschnitten K1 und K2, ist der Klemmabschnitt 59 dagegen großflächig ausgeführt, um eine flächige Klemmung der als Dampfdurchführung dienenden Glashohlwelle 8 zu erreichen. Der entstehende Reibschluss fixiert die Glashohlwelle 8 spielfrei in der Nabe 58 des Rotationsantriebes 57. Am Außenumfang des Klemmeinsatzes 59 ist eine hier als (unterbrochener) Ringflansch ausgebildete umlaufende Nase 92 vorgesehen, die in eine Ringnut 93 am Innenumfang der Nabe 58 eingreift und den Klemmeinsatz 59 axial in der Nabe 58 sichert. Bei der Demontage der Glashohlwelle 8 verbleibt der Klemmeinsatz 59 somit in der Nabe 58 und lediglich der Spannschraubring 67 ist gelöst und muß nicht entfernt werden, um die Glashohlwelle 8 aus der Nabe 58 des Rotationsantriebes 57 zu entfernen.

In den Figuren 6 und 7 ist erkennbar, dass die Glashohlwelle 8 an ihrem Außenumfang eine als Ringnut ausgebildete Einformung 68 trägt, der eine als Ringwulst ausgebildete Ausformung 69 am Innenumfang des Klemmeinsatzes 59 zugeordnet ist. Da die am Klemmeinsatz 59 vorgesehene Ausformung 69 in dem über die Nabe 58 überstehenden Teilbereich des Klemmeinsatzes 59 und insbesondere am Innenumfang des über die Nabe 58 vorstehenden Klemmabschnitts K2 angeordnet ist, lässt sich die Glashohlwelle 8 auch nachträglich noch in den in der Nabe 58 befindlichen Klemmeinsatz 59 einschieben oder dort herausziehen, wenn beispielsweise ein Austausch des Verdampfungsgefäßes 5 auch einen Wechsel der Glashohlwelle 8 erfordert.

In Figur 6 wird deutlich, dass die als Dampfdurchführung dienende Glashohlwelle 8 durch die Nabe 58 des Rotationsantriebs 57 hindurch gesteckt und über den Klemmeinsatz 59, der sich zwischen der Nabe 58 und der Glashohlwelle 8 befindet, in der Nabe 58 verklemmt ist, so dass eine Rotation der Nabe 58 des Rotationsantriebs 57 um eine Längsachse der Nabe 58 zu einer entsprechenden Rotation des Klemmeinsatzes 59, der Glashohlwelle 8 und des mit der Glashohlwelle 8 drehfest verbundenen Verdampfungsgefäßes 5 führt. Die Nabe 58, der Klemmeinsatz 59 und die Glashohlwelle 8 sind konzentrisch zueinander angeordnet. Die drehfeste Verbindung zwischen der Glashohlwelle 8 und dem Verdampfungsgefäß 5 wird durch eine Schliffverbindung gewährleistet, die vorzugsweise als Kegelschliffverbindung ausgeführt ist, bei der die Glashohlwelle 8 mit ihrer dem Verdampfungsgefäß 5 zugewandten Seite, an der ein Schliffkern 94 ausgebildet ist, in eine an einem Gefäßhals des Verdampfungsgefäßes 5 ausgebildete Schliffhülse eingreift. Zur Sicherung der Schliffverbindung zwischen der Glashohlwelle 8 und dem Verdampfungsgefäß 5 kann eine zusätzliche Schliffklemme 70 (vgl. Fig. 1) vorgesehen sein.

In Figur 6 ist erkennbar, dass der Spannschraubring 67 ein Gewinde 71 trägt, das mit einem Gegengewinde 72 an einem Abdrückschraubring 73 zusammenwirkt. Beim Losschrauben des Abdrückschraubringes 73 vom Spannschraubring 67 drückt der Abdrückschraubring 73 derart auf das Verdampfungsgefäß 5 und dessen Gefäßhals, dass die Klemm- oder Schliffverbindung zwischen dem Verdampfungsgefäß 5 und der das Verdampfungsgefäß 5 tragenden Glashohlwelle 8 gelöst wird.

Die als Dampfdurchführung ausgebildete Glashohlwelle 8 reicht mit ihrem dem Verdampfungsgefäß 5 abgewandten Wellenende in die Anschlussöffnung 74 des zu dem Kühler 6 führenden Anschlussstutzens 9 hinein und ist gegenüber diesem Anschlussstutzen 9 mit einer, in den Figuren 6, 9 und 10 näher dargestellten Gleitringdichtung abgedichtet. Diese Gleitringdichtung wird durch einen Dichtring 76 gebildet, der zwischen dem Anschlussstutzen 9 und einem Antriebsgehäuse 77 des Rotationsantriebs 57 eingespannt ist und an der rotierenden Glashohlwelle 8 dichtend anliegt. Der Dichtring 76 ist als Ringscheibe ausgebildet, deren äußere Ringzone 78 als Einspannrand dient. Die Ringscheibe weist eine in Längserstreckung der Glashohlwelle 8 umgebogene Ringzone 79 auf, damit der Dichtring 76 mit einem in Längsrichtung der Glashohlwelle orientierten Teilbereich T der Ringscheibe dichtend anliegt. Dabei liegt der in Längsrichtung der Glashohlwelle 8 orientierte Teilbereich T der Ringscheibe federelastisch an der Glashohlwelle 8 an, so dass eine stets gleichbleibend gute und dauerhafte Abdichtung in diesem Bereich sichergestellt ist. Der Dichtring 76 ist einstückig ausgebildet und mit geringem Aufwand als Materialcompound herstellbar. Dabei wird ein Tefloncompound bevorzugt, der sich durch einen geringen Reibungskoeffizienten und einem reduzierten Verschleiß auszeichnet.

Der Dichtring 76, der in Längsschnitt j- oder u-förmig ausgestaltet ist und dessen die Ringöffnung begrenzender Innenrand 95 in eine der Glashohlwelle 8 abgewandte Richtung nach außen gebogen sein kann, weist an seinem Einspannrand zumindest eine Ringnut 80 auf, dem ein komplementärer Ringwulst 81 am benachbarten Stirnrand des Antriebsgehäuses 77 zugeordnet sein kann.

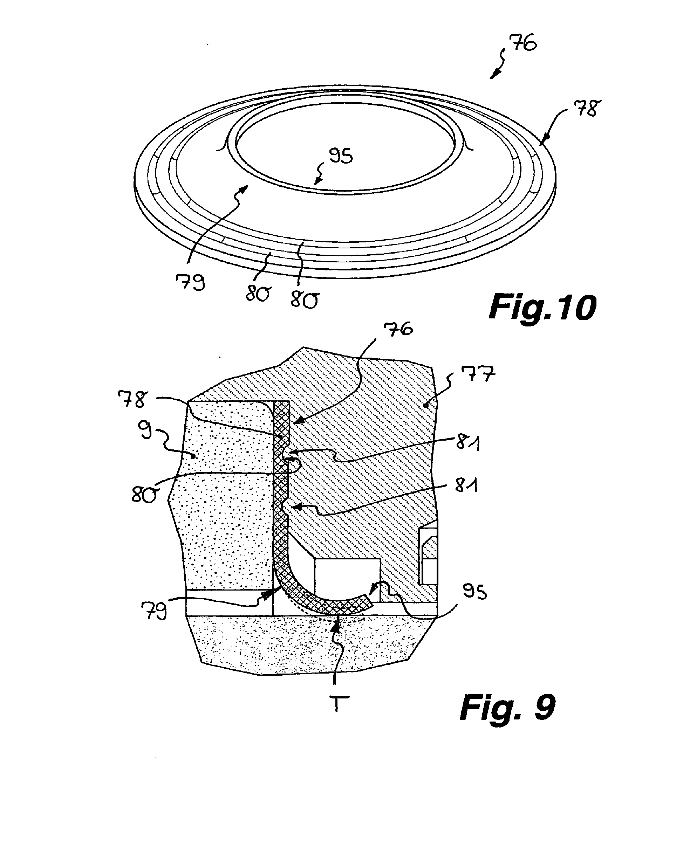

Durch ein Vergleich der in Fig. 9 zum einen in durchgezogenen Linien und zum anderen in gestrichelten Linien dargestellten inneren Ringzone 79 ist angedeutet, dass diese Ringzone 79 derart in Richtung zur Glashohlwelle 8 unter Vorspannung anliegt, dass dadurch eine automatische Nachstellung des an der Glashohlwelle 8 anliegenden Dichtringes 76 bei Abnutzung erfolgt.

Der Klemmeinsatz 59 ist vorzugsweise als Kunststoffteil und insbesondere als Kunststoffspritzgussteil ausgebildet. Da im Bereich der inneren Ringzonen 79 des Dichtringes 76 das Glas der Glashohlwelle 9, der insbesondere aus Kunststoff hergestellte Klemmeinsatz 59 und die vorzugsweise metallene Nabe 58 des Rotationsantriebs 57 unter Pressdruck aneinander anliegen, stellt eine solche Materialwahl diese Einzelteile 9, 59, 58 die ideale Kombination zwischen Weichheit, Steifigkeit und Reibschlüssigkeit dieser miteinander rotierenden Einzelteile dar.

Dem Rotationsantrieb 57 ist eine nicht weiter dargestellte Motorsteuerung zugeordnet, die vorzugsweise eine stufenlose Drehzahleinstellung insbesondere mit der Möglichkeit zur Drehrichtungsumkehr hat. Zur Vermeidung des Anhaftens von festen Rückständen an der Gefäßinnenwand, insbesondere während eines Trocknungsprozesses, kann ein Betriebmodus sinnvoll sein, der eine periodische Drehrichtungsumkehr vorsieht. Um bei einer Blockade der Rotationsbewegung eine Sicherheitsabschaltung des Rotationsverdampfers 1 zu bewirken, ist eine Überwachung des Motorstroms vorgesehen. Zur Beginn der Rotationsbewegung ist ein Sanftanlauf des Rotationsantriebes 57 vorgesehen, wozu in dessen Motorsteuerung eine entsprechende Anlaufkennlinie hinterlegt ist, die beispielsweise eine Begrenzung des Motorstromes vorsehen kann.

Das Temperiergefäß 10 dient der Temperierung des im Temperiergefäß 10 befindlichen Flüssigkeitsbades und insbesondere der kontrollierten Wärmezufuhr in das Verdampfungsgefäß 5. Das Temperiergefäß 10 weist dazu eine elektrische Temperiereinrichtung und insbesondere eine elektrische Heizeinrichtung auf. Das als Temperierflüssigkeit verwendete Öl oder Wasser wird durch die Rotation des Verdampfungsgefäßes 5 derart umgewälzt, dass eine homogene Temperaturverteilung sichergestellt ist. Die Trägheit der Badtemperatur stabilisiert die Heiztemperatur bei Einsetzen des Siedens im Verdampfungsgefäß 5 (Verdampfungskälte).

Um das Temperiergefäß 10 einfach befüllen und entleeren zu können, ist das Temperiergefäß 10 lösbar auf den Geräteständer 2 des Rotationsverdampfers aufgesetzt. Der Geräteständer 2 ist ausreichend standsicher, um ein Umkippen des Rotationsverdampfers 1 auch bei entferntem Temperiergefäß 10 auszuschließen. Am Geräteständer 2 oder am Temperiergefäß 10 ist zumindest ein Positioniervorsprung vorgesehen, der mit einer zugeordneten Positioniereinformung am Temperiergefäß 10 beziehungsweise am Geräteständer 2 zusammenwirkt. Der Rotationsverdampfer 1 weist vorzugsweise zwei solcher, mit jeweils einer Positioniereinformung zusammenwirkender, beispielsweise zapfenartig vorstehender Positioniervorsprünge auf, von denen der eine zur elektrischen Kontaktierung der im Temperiergefäß 10 vorgesehenen Temperiereinrichtung mit einem elektrischen Anschluss am Geräteständer und von denen der andere Positioniervorsprung zur Kontaktierung der Signalverbindung zwischen dem Rotationsverdampfer 1 und einem in das Temperiergefäß 10 integrierten Temperatursensor bestimmt ist.

Im Bereich von Positioniervorsprung und Positioniereinformung, die etwa achsparallel zur Rotationsachse des Rotationsantriebes 57 verfahrbar sind, ist eine elektrische Kupplung angeordnet, die zum elektrischen Kontaktieren der im Temperiergefäß vorgesehenen Temperiereinrichtung mit einem elektrischen Anschluss am Geräteständer bestimmt ist. Um die Position des Verdampfungsgefäßes 5 relativ zum Geräteständer 2 variieren und um unterschiedlich große Verdampfungsgefäße 5 im Rotationsverdampfer 1 einsetzen zu können, ist der wenigstens eine, am Geräteständer 2 vorgesehene Positioniervorsprung oder die Positioniereinformung daran mittels einer hier nicht weiter dargestellten Schiebeführung verfahrbar gehalten. Diese Schiebeführung hat zumindest zwei teleskopartig ineinander geführte Schiebeteile, von denen ein Schiebeteil am Geräteständer 2 unverrückbar gehalten ist, und von denen ein anderes Schiebeteil den zumindest einen Positioniervorsprung oder die wenigstens eine Positioniereinformung trägt.

Aus Figur 1 wird deutlich, dass das Temperiergefäß 10 zumindest in seinem lichten Innenquerschnitt und vorzugsweise auch in seinem Außenquerschnitt eine etwa dreieckige Grundform aufweist. Um einem Schwappen der im Temperiergefäß 10 befindlichen Temperierflüssigkeit im Betrieb und beim Transport des Temperiergefäßes 10 entgegenzuwirken, weist das Temperiergefäß 10 mit Ausnahme im Bereich einer Ausgießtülle 87 vertikal orientierte, das heißt weitgehend senkrechte Gefäß-Innenwände 88 auf. Die Ausgießtülle 87 ist in Verlängerung der Scheitellinie 75 der dreieckigen Grundform vorgesehen, wobei die Scheitellinie 75 in die dem Verdampfungsgefäß 5 zugewandte Richtung orientiert ist. Am Außenumfang des Temperiergefäßes 10 sind ergonomische Griffmulden vorgesehen, an denen sich das Temperiergefäß bequem ergreifen lässt. Eine vorzugsweise an zumindest einer der Gefäß-Innenwände 88 vorgesehene Skala zeigt die Füllhöhe der Temperierflüssigkeit an. Da das Temperiergefäß 10 entlang der Rotationsachse verschiebbar ist, ist ein großes Spektrum von Verdampfungsgefäßen einsetzbar. Auch größere Verdampfungsgefäße 5 können im Temperiergefäß 10 eintauchen, weil dies entsprechend tief ausgestaltet ist. Auf dem Temperiergefäß 10 ist eine transparente Abdeckhaube 89 aufsetzbar. Die Abdeckhaube 89 weist wenigstens ein, auf dem oberen Schmalrand des Temperiergefäßes 10 absetzbares erstes Haubenteil 90 auf, an dem mindestens ein zweites Haubenteil 91 verschwenkbar oder aufklappbar gehalten ist. Da das während des Betriebes meist unter Vakuum stehende Verdampfungsgefäß 5 zum Zwecke eines verbesserten Wärmeübergangs im Flüssigkeitsbad aus unbeschichtetem Glas hergestellt ist und da vorzugsweise nur die übrigen Komponenten des Glasaufbaus 4 aus bruchfestem oder als Splitterschutz beschichtetem Glas bestehen, dient die Abdeckhaube 89 als Splitterschutz.

Das Temperiergefäß 10 weist einen Füllstandsensor auf, der mit einer Dosierpumpe in Steuerverbindung steht, die mit einem Temperierflüssigkeitsvorrat verbunden ist. Der Füllstandsensor ist Bestandteil einer Füllstandsüberwachung, die bei Unterschreiten eines Temperierflüssigkeits-Minimums eine Notabschaltung bewirkt. Der Füllstandsensor kann zusätzlich oder stattdessen auch Bestandteil einer Füllstandsregelung sein, die zur Kompensation von Verdunstungsverlusten bestimmt ist.

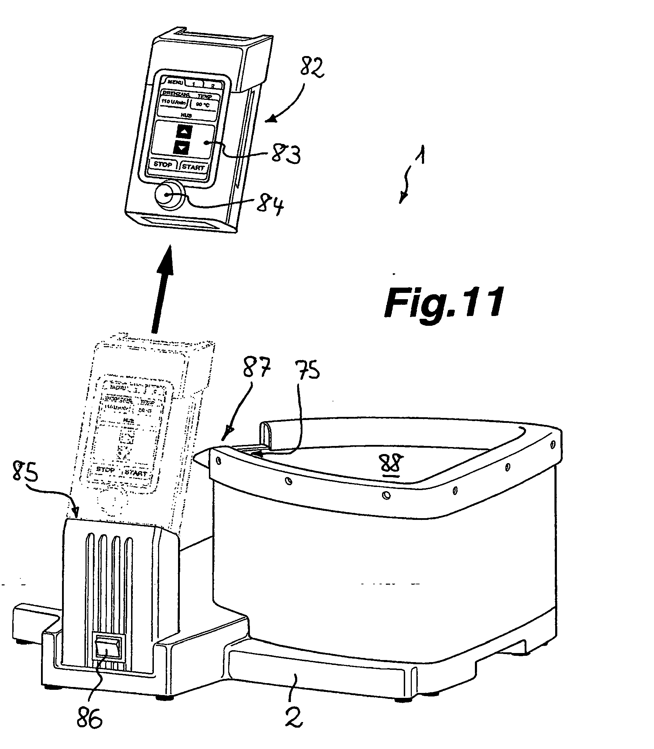

Aus einem Vergleich der Figuren 1 und 11 wird deutlich, dass die Bedienung des Rotationsverdampfers 1 über eine zentrale Bedienungseinheit 82 erfolgt, die einen direkten Zugriff auf alle technischen Funktionalitäten und somit u.a. auch auf Rotationsantrieb 57, Hubantrieb und die im Temperiergefäß 10 vorgesehene Temperiereinrichtung ermöglicht.

Um den Rotationsverdampfer 1 auch bedienen zu können, wenn sich dieser geschützt beispielsweise in einem Abzug befindet, ist die Bedienungseinheit 82 als eine vom Rotationsverdampfer 1 lösbare und vorzugsweise drahtlose Fernbedienungseinheit ausgebildet. Eine Datenübertragungsschnittstelle, die beispielsweise als USB-Schnittstelle ausgebildet sein kann, erlaubt die Prozesssteuerung und/oder die Dokumentation der Prozessparameter an einer externen Datenverarbeitungsanlage und insbesondere am PC. Die als drahtlose Fernbedienung verwendbare Fernbedienungseinheit 82 weist ein Display 83 auf, das vorzugsweise als Touch-Screen mit intuitiven, an den Betriebsmodus angepassten Bedienelementen ausgestaltet ist. An der Bedienungseinheit 82 ist ein hier als Druck- und Drehknopf ausgebildeter Bedienknopf 84 als weiteres Bedienelement vorgesehen, das beispielsweise zur Eingabe von Zahlenwerten genutzt werden kann.

Am Rotationsverdampfer 1 ist eine Konsole oder Ablage 85 für die Bedienungseinheit 82 vorgesehen, die bei abgelegter Bedienungseinheit 82 eine optimale Bedienhöhe der Bedienelemente und des Displays 83 sicherstellt und die dazu über den Geräteständer 4 vorsteht. Der erfindungsgemäße Rotationsverdampfer kann wahlweise entweder mit der auf der Konsole 85 befindlichen Fernbedienungseinheit 82 unmittelbar bedient oder über die Fernbedienungseinheit 82 auch mit Abstand betätigt werden. Ein Netzschalter 86, der auch als Not-Aus verwendbar ist, ist gut erreichbar auf der Vorderseite des Rotationsverdampfers 1 angeordnet.

Das als Touch-Screen ausgestaltete Display 83 dient beispielsweise zur Anzeige der Ist-Temperatur im Flüssigkeitsbad, der Soll-Temperatur der in das Temperiergefäß 10 integrierten Temperiereinrichtung, der Drehzahl des Rotationsantriebes oder zur Anzeige vergleichbarer Prozessparameter. Um die auf dem Display 83 ersichtlichen Kontrollfunktionen auswählen und/oder die Prozessparameter verändern zu können, kann zusätzlich oder stattdessen auch der Bedienknopf 84 verwendet werden. Um die Bedienung der vorzugsweise im Rotationsverdampfer 1 befindlichen Steuerungseinrichtung, die auch die Motorsteuerung für den Rotationsantrieb 57 umfassen kann, möglichst einfach zu gestalten, sind einzelne Funktionen der Steuerungseinrichtung in einer auf dem Display 83 darstellbaren Menüstruktur angeordnet, wobei das Blättern durch die einzelnen Menüs mittels dem Bedienknopf 84 und/oder dem gegebenenfalls als Touch-Screen ausgebildeten Display 83 erfolgt.

Die am Rotationsverdampfer 1 über dessen Geräteständer 4 vorstehende Ablage oder Konsole 85 ist zur Auflage oder Ablage der Fernbedienungseinheit 82 vorgesehen. Die Ablage oder Konsole 85 hat zumindest ein mit der Bedienungseinheit 82 lösbar verbindbares Kontaktsystem, das für die Stromzuführung zum Ladesystem für die in der Bedienungseinheit 82 befindlichen Akkus und vorzugsweise auch zur Leiter-basierten Steuerverbindung zwischen dem wenigstens einen Bedienelement 83, 84 der Bedienungseinheit 82 und der Steuerungseinrichtung unter Ausschaltung der drahtlosen Steuerverbindung aufweist. Liegt die Bedienungseinheit 82 auf der Ablage oder Konsole 85 auf, wird die drahtlose Steuerbindung vorläufig eingestellt zu Gunsten einer Leiter-basierten Steuerverbindung zwischen dem wenigstens einen, an der Bedienungseinheit 82 vorgesehenen Bedienelement 83, 84 und der Steuerungseinrichtung.

Die Steuerungseinrichtung des Rotationsverdampfers 1 weist auch eine Not-Aus-Funktion auf, deren Auslösen die Stromzufuhr zur Temperiereinrichtung im Temperiergefäß 10 unterbricht und die Hochfahrbewegung des am Führungsturm 3 verfahrbar gehaltenen Glasaufbaus 4 in die Ruheposition auslöst. Dabei kann die in der Steuerungsseinrichtung abgespeicherte Not-Aus-Funktion beispielsweise manuell an einem speziellen Not-Aus-Schalter an der Bedienungseinheit 82 oder am Netzschalter 86 des Rotationsverdampfers 1 oder auch automatisch ausgelöst werden, wenn die Bedienungseinheit 82 nicht mehr mit Strom versorgt wird oder die drahtlose Steuerverbindung zwischen der Fernbedienungseinheit 82 und dem Rotationsverdampfer 1 unterbrochen wird. Da die Stromzufuhr zur Temperiereinrichtung im Temperiergefäß 10 unterbrochen wird, ist ein weiteres unkontrolliertes Aufheizen des Versuchaufbaus nicht zu befürchten. Da auch das Verdampfungsgefäß 5 aus der im Flüssigkeitsbad befindlichen Betriebsstellung in die außerhalb des Temperiergefäßes 10 vorgesehene Ruheposition verfahren wird, kann die im Verdampfungsgefäß 10 befindliche Flüssigkeit nicht unbeabsichtigt durch die im Flüssigkeitsbad befindliche Restwärme aufgeheizt werden.

Auf dem Display 83 der Bedienungseinheit 82 ist beispielsweise auch die Ist-Temperatur der im Temperiergefäß 10 befindlichen Temperierflüssigkeit ablesbar. Über das als Touch-Screen ausgebildete Display 83 und/oder den Bedienknopf 84 kann die benötigte Soll-Temperatur der im Temperiergefäß 10 befindlichen Temperierflüssigkeit vorgegeben werden. Auf gleiche Weise ist in die Steuerungseinrichtung auch eine Drehrichtungsänderung des Rotationsantriebs 57 vorzugsweise in vorwählbaren Zeitabständen vorgebbar. Über die Bedienungseinheit 82 kann schließlich auch vorgegeben werden, wie weit das Verdampfungsgefäß 5 des Glasaufbaus 4 am Führungsturm 3 heruntergefahren werden soll, wobei durch Drehen am Bedienknopf 84 auch eine Feinjustierung der Eintauchtiefe des Verdampfungsgefäßes 5 im Temperiergefäß 10 möglich sein kann.

Durch das Erwärmen des Verdampfungsgefäßes 5 im Flüssigkeitsbad des Temperiergefäßes 10 verdampft die im Verdampfungsgefäß 5 befindliche Lösung und der Dampf strömt durch die als Dampfdurchführung dienende Glashohlwelle 8 in den zum Kühler 6 führenden Anschlussstutzen 9. Im Kühler 6 kann der Dampf kondensieren und in das Auffanggefäß 7 abfließen. Eine Abtrennung von Stoffbestandteilen wird dadurch erreicht, dass sich deren Siedepunkte unterscheiden, so dass bei einer vorgegebenen Temperatur bestimmte Stoffe verdampfen können, während andere Stoffe vorerst noch im Verdampfungsgefäß verbleiben. Durch Anlegen eines Vakuums an dem Glasaufbau 4 kann die Siedetemperatur gesenkt werden, wodurch höhersiedende Lösungsmittel bei geringerer Temperatur verdampft werden können, als es bei Normaldruck der Fall wäre. In dem unter Vakuum stehenden Glasaufbau 4 lassen sich auch Substanzen destillieren, die temperaturempfindlich sind. Durch das Arbeiten bei geringerer Siedetemperatur kann eine Zersetzung solcher temperaturempfindlicher Substanzen verhindert werden. Der als Gleitringdichtung dienende Dichtring 76 dichtet dabei die rotierende Glashohlwelle 8 gegen den Atmosphärendruck ab und sorgt so für die Aufrechterhaltung des Vakuums im Inneren des Glasaufbaus 4. Da der Innendurchmesser des Dichtringes 76 etwas kleiner als der Durchmesser der Glashohlwelle 8 in diesem Bereich ist, ergibt sich eine Vorspannung des Dichtringes 76, die durch die am Dichtring anliegende Druckdifferenz weiter erhöht wird. Bei Abnutzung des Dichtringes 76 durch Abrieb stellt sich die Gleitringdichtung aufgrund der Vorspannung des Dichtringes 76 selbst nach. Die am Antriebsgehäuse 77 vorgesehenen Ringwülste 81 drücken den Dichtring ringförmig gegen den Anschlussstutzen 9, und zwar derart, dass die Überhöhung der Flächenpressung entlang dieser beiden geschlossenen Linien zusätzlich für eine optimale Abdichtung sorgt.

Die Beendigung des Verdampfungsprozesses erfolgt durch eine kontrollierte Abschaltung, die unabhängig von der Stromversorgung bei einem Ausheben des Verdampfungsgefäßes 5 aus dem Temperiergefäß 10, bei einem Rotationsstopp des Rotationsantriebes 57, bei einer schlagartigen Aufhebung des im Glasaufbau 4 erzeugten Vakuums oder bei einer Abschaltung der Kühlung des Kühlers 6 erfolgt, wobei dem Kühler 6 hierzu eine Schnittstelle für ein Schaltventil zugeordnet ist. Eine Abschaltung des Rotationsverdampfers 1 und somit eine Beendigung des Verdampfungsprozesses kann durch einen Anwender, durch Erreichen eines vorgegebenen Prozessparameters (Prozessende), einen Prozessfehler oder durch Stromausfall ausgelöst werden.

**Bezugszeichenliste**

| | |
|---|---|
| Rotationsverdampfer 1 | 1 |
| Geräteständer | 2 |
| Führungsturm | 3 |
| Glasaufbau | 4 |
| Verdampfungsgefäß | 5 |
| Kühler | 6 |
| Auffanggefäß | 7 |
| Glashohlwelle | 8 |
| Anschlussstutzen (des Kühlers) | 9 |
| Temperiergefäß | 10 |
| Schlauchanschluß (am Glasaufbau) | 11 |
| Schlauchanschluß (am Glasaufbau) | 12 |
| Schlauchanschluß (am Glasaufbau) | 13 |
| Schlauchleitung (frei verlegt) | 14 |
| Schlauchleitung (frei verlegt) | 15 |
| Schlauchleitung (frei verlegt) | 16 |
| Kanal | 17 |
| Schlauchleitung (im Führungsturm) | 18 |
| Schlauchleitung (im Führungsturm) | 19 |
| Schlauchleitung (im Führungsturm) | 20 |
| Schlitten | 21 |
| Profilabschnitt (Hohlprofil) | 22 |
| Profilabschnitt | 23 |
| Hohlraum (zischen den Profilabschnitten) | 24 |
| Führungsschlitz | 25 |
| Schmalrand (des Profilabschnittes 22) | 26 |
| Schmalrand (des Profilabschnittes 23) | 27 |
| Schlittenführung | 28 |
| Führungsstab (der Schlittenführung 28) | 29 |
| Führungsstab (der Schlittenführung 28) | 30 |
| Führungsloch (im Schlitten 21) | 31 |
| Führungsloch (im Schlitten 21) | 32 |
| Verbindungsarm | 33 |
| Gasdruckfeder | 34 |
| Seilwinde | 35 |
| Seiltrommel | 36 |
| Seil | 37 |
| Flaschenzug | 38 |
| Umlenkrollen (des Flaschenzuges) | 39 |
| Umlenkrollen (des Flaschenzuges) | 40 |
| elektrischer Antrieb (der Seilwinde) | 41 |
| Schwenkachse (der Halterung) | 42 |
| Trageteil (der Halterung) | 43 |
| Spindeltrieb | 44 |
| Stellspindel | 45 |
| Spindelgewinde | 46 |
| Schwenkachse (der Stellspindel am Halteteil) | 47 |
| Schwenkachse (der Spindelmutter) | 48 |
| Spindelmutter | 49 |
| Stellrad | 50 |
| Skalierung (für Hubhöhe) | 51 |
| Skala (der Skalierung 51) | 52 |
| Kante (des Schlittens 21 als Anzeige der Hubhöhe) | 53 |
| Skalierung (für den Schwenkwinkel) | 54 |
| Skala (der Skalierung 54) | 55 |
| Kante (am Tragteil 43 als Anzeige der Skalierung 54) | 56 |
| Rotationsantrieb | 57 |
| Nabe | 58 |
| Klemmeinsatz | 59 |
| Stützstege | 60 |
| Verbindungsstege (links) | 61 |
| Verbindungsstege (rechts) | 62 |
| Klemmschräge (links) | 63 |
| Klemmschräge (rechts) | 64 |
| Gegenschräge (in der Nabe) | 65 |
| Gegenschräge (im Spannschraubring) | 66 |
| Spannschraubring | 67 |
| Einformung | 68 |
| Ausformung | 69 |
| Schliffklemme | 70 |
| Gewinde (am Spannschraubring 67) | 71 |
| Gegengewinde (am Abdrückschraubring) | 72 |
| Abdrückschraubring | 73 |
| Anschlussöffnung (des Anschlussstutzens) | 74 |
| Scheitellinie | 75 |
| Dichtring | 76 |
| Antriebsgehäuse | 77 |
| äußere Ringzone (des Dichtrings) | 78 |
| umgebogene Ringzone (des Dichtringes) | 79 |
| Ringnut (am Dichtring) | 80 |
| Ringwulst (am Stirnrand des Antriebsgehäuses) | 81 |
| (Fern-)Bedienungseinheit | 82 |
| Display | 83 |
| Bedienknopf | 84 |
| Ablage oder Konsole (für Bedienungseinheit) | 85 |
| Netzschalter | 86 |
| Ausgießtülle | 87 |
| Gefäß-Innenwände des Temperiergefäßes | 88 |
| Abdeckhaube | 89 |
| festes Haubenteil | 90 |
| aufklappbares Haubenteil | 91 |
| Nase | 92 |
| Ringnut | 93 |
| Schliffkern | 94 |
| Innenrand | 95 |
| Klemmabschnitt (links) | K1 |
| Klemmabschnitt (rechts) | K2 |
| Teilbereich (des Dichtringes) | T |

## Patentansprüche

1. Rotationsverdampfer (1) mit einem Geräteständer (2), auf dem ein Führungsturm (3) übersteht, mit einem ein Verdampfungsgefäß (5) aufweisenden Glasaufbau (4), der zum Anheben und Absenken insbesondere seines Verdampfungsgefäßes (5) an einem Schlitten (21) gehalten ist, der seitlich am Führungsturm (3) verfahrbar ist, sowie mit zumindest einer Fluidleitung, welche mit dem Glasaufbau (4) verbunden ist, wobei der Führungsturm (3) einen in Längserstreckung des Turmes (3) orientierten Kanal (17) aufweist, **dadurch gekennzeichnet, dass** der Führungsturm (3) dazu aus zumindest zwei Profilabschnitten (22, 23) gebildet ist, die in einer in Längserstreckung des Führungsturmes (3) orientierten Trennlage verbunden sind, dass der Führungsturm (3) wenigstens einen Profilabschnitt (22) aufweist, der als Hohlprofil ausgebildet ist, und dass mindestens ein Hohlprofil-Innenraum wenigstens eines Profilabschnittes (22) den Kanal (17) des Führungsturmes (3) bildet, in dem ein Leitungsabschnitt zumindest einer, mit dem Glasaufbau (4) verbundenen Fluidleitung vorgesehen ist, die in einem Schlauchanschluss mündet oder endet, der an einem bodenseitigen und dem freien Ende des Führungsturmes (3) abgewandten Bereich des Rotationsverdampfers (1) angeordnet ist.

2. Rotationsverdampfer nach Anspruch 1, **dadurch gekennzeichnet, dass** wenigstens ein im Führungsturm (3) vorgesehener Leitungsabschnitt an seinem dem bodenseitigen ersten Schlauchanschluss abgewandten Leitungsabschnittsende mit einem zweiten Schlauchanschluß verbunden ist, der an dem freien Endbereich des Führungsturmes (3) angeordnet ist.

3. Rotationsverdampfer nach Anspruch 1 oder 2, **dadurch gekennzeichnet, dass** wenigstens ein im Kanal (17) des Führungsturmes (3) vorgesehener Leitungsabschnitt der zumindest einen Fluidleitung als eine im Kanal (17) geführte Schlauchleitung (18, 19, 20) ausgebildet ist und dass dieser Leitungsabschnitt an seinen Schlauchleitungsenden mit dem ersten und gegebenenfalls dem zweiten Schlauchanschluß verbunden ist.

4. Rotationsverdampfer nach einem der Ansprüche 1 bis 3, **dadurch gekennzeichnet, dass** zumindest zwei Profilabschnitte (22, 23) des Führungsturmes (3) einen Hohlraum (24) umgrenzen, der an einem Führungsschlitz (25) offen ausgebildet ist, dass in dem Hohlraum (24) eine Schlittenführung (28) vorgesehen ist, an welcher der Schlitten (21) verfahrbar geführt ist, und dass der Schlitten (21) zumindest einen, den Führungsschlitz (25) durchsetzenden Verbindungsarm (33) trägt, der mit dem Glasaufbau (4) verbunden ist.

5. Rotationsverdampfer nach einem der Ansprüche 1 bis 4, **dadurch gekennzeichnet, dass** der Führungsschlitz (25) in der Trennlage zwischen wenigstens zwei Profilabschnitten (22, 23) angeordnet und von benachbarten Schmalrändern (26, 27) dieser Profilabschnitte (22, 23) begrenzt ist.

6. Rotationsverdampfer nach einem der Ansprüche 1 bis 5, **dadurch gekennzeichnet, dass** der Schlitten (21) mittels einer Skalierung (51) positionierbar ist, die eine am Außenumfang des Führungsturmes (3) vorgesehene Skala (52) aufweist, die mit einer am Schlitten (21) befindlichen Anzeige zusammenwirkt.

7. Rotationsverdampfer nach einem der Ansprüche 1 bis 6, **dadurch gekennzeichnet, dass** der Schlitten (21) von einer Hebeposition gegen eine Rückstellkraft in eine Absenkstellung verfahrbar ist und dass zum Verfahren des Schlittens (21) eine gegenüber dem Führungsturm (3) ortsfeste Seilwinde (35) vorgesehen ist, die zumindest ein aufwickelbares Seil (37) hat, das am Schlitten (21) gehalten oder geführt ist.

8. Rotationsverdampfer nach Anspruch 7, **dadurch gekennzeichnet, dass** das zumindest eine Seil (37) der Seilwinde (35) über einen Flaschenzug (38) geführt ist.

9. Rotationsverdampfer nach Anspruch 7 oder 8, **dadurch gekennzeichnet, dass** die Seilwinde (35) einen Antriebsmotor hat, der federnd oder schwingungsdämpfend gelagert ist.

10. Rotationsverdampfer nach einem der Ansprüche 7 bis 9, **dadurch gekennzeichnet, dass** die Seilwinde (35) einen Antriebsmotor hat, der als ein, in ein stromlosen Zustand momentfreier elektrischer Antriebsmotor ausgebildet ist.

11. Rotationsverdampfer nach einem der Ansprüche 7 bis 10, **dadurch gekennzeichnet, dass** die Seilwinde (35) einen Antriebsmotor hat, der als Schrittmotor ausgebildet ist.

12. Rotationsverdampfer nach einem der Ansprüche 7 bis 11, **dadurch gekennzeichnet, dass** zumindest eine Gasdruckfeder (34) als Rückstellkraft vorgesehen ist.

13. Rotationsverdampfer nach Anspruch 12, **dadurch gekennzeichnet, dass** die zumindest eine Gasdruckfeder (34) den Schlitten (21) in der Hebeposition gegen einen Schiebeanschlag drückt.

## Claims

1. Rotary evaporator (1) comprising an appliance stand (2), on which a guide tower (3) projects, a glass superstructure (4) which has an evaporation vessel (5) and, for raising and lowering in particular its evaporation vessel (5), is held on a carriage (21) movable laterally on the guide tower (3), and at least one fluid line which is connected to the glass superstructure (4), the guide tower (3) having a duct (17) which is oriented in the longitudinal extension direction of the tower (3), **characterised in that** the guide tower (3) is formed from at least two profile portions (22, 23) which are connected in a parting position oriented in the longitudinal extension direction of the guide tower (3), **in that** the guide tower (3) has at least one profile portion (22) which is formed as a hollow profile, and **in that** at least one hollow profile inner space of at least one profile portion (22) forms the duct (17) of the guide tower (3), in which there is provided a line portion of at least one fluid line which is connected to the glass superstructure (4) and which issues or ends in a hose connection which is arranged on a bottom-side region of the rotary evaporator (1) facing away from the free end of the guide tower (3).

2. Rotary evaporator as claimed in claim 1, **characterised in that** at least one line portion provided in the guide tower (3) is connected, at a line portion end thereof facing away from the bottom-side first hose connection, to a second hose connection which is arranged at the free end region of the guide tower (3).

3. Rotary evaporator as claimed in claim 1 or 2, **characterised in that** at least one line portion, provided in the duct (17) of the guide tower (3), of the at least one fluid line is formed as a hose line (18, 19, 20) guided in the duct (17), and **in that** this line portion is connected at hose line ends thereof to the first and, if appropriate, the second hose connection.

4. Rotary evaporator as claimed in any one of claims 1 to 3, **characterised in that** at least two profile portions (22, 23) of the guide tower (3) delimit a cavity (24) which is open at a guide slot (25), **in that** a carriage guide (28), on which the carriage (21) is guided movably, is provided in the cavity (24), and **in that** the carriage (21) bears at least one connecting arm (33) which passes through the guide slot (25) and which is connected to the glass superstructure (4).

5. Rotary evaporator as claimed in any one of claims 1 to 4, **characterised in that** the guide slot (25) is arranged in the parting position between at least two profile portions (22, 23) and is delimited by adjacent narrow margins (26, 27) of these profile portions (22, 23).

6. Rotary evaporator as claimed in any one of claims 1 to 5, **characterised in that** the carriage (21) is positionable by a scaling (51) having a scale (52) which is provided on the outer circumference of the guide tower (3) and which cooperates with an indicator located on the carriage (21).

7. Rotary evaporator as claimed in any one of claims 1 to 6, **characterised in that** the carriage (21) is movable from a raised position counter to a restoring force into a lowered position, and **in that** in order to move the carriage (21), there is provided a rope winch (35) which is fixed with respect to the guide tower (3) and has at least one windable rope (37) which is held or guided on the carriage (21).

8. Rotary evaporator as claimed in claim 7, **characterised in that** the at least one rope (37) of the rope winch (35) is guided via a pulley block (38).

9. Rotary evaporator as claimed in claim 7 or 8, **characterised in that** the rope winch (35) has a drive motor which is mounted in a resilient or vibration-damping manner.

10. Rotary evaporator as claimed in any one of claims 7 to 9, **characterised in that** the rope winch (35) has a drive motor which is formed as an electric drive motor which is torque-free in a current-less state.

11. Rotary evaporator as claimed in any one of claims 7 to 10, **characterised in that** the rope winch (35) has a drive motor which is formed as a stepping motor.

12. Rotary evaporator as claimed in any one of claims 7 to 11, **characterised in that** at least one gas pressure spring (34) is provided as the restoring force.

13. Rotary evaporator as claimed in claim 12, **characterised in that** the at least one gas pressure spring (34) presses the carriage (21) against a sliding stop in the raised position.

## Revendications

1. Évaporateur rotatif (1) avec un socle d'appareil (2), sur lequel est installée une tour de guidage (3), avec une structure de verre (4) présentant un récipient d'évaporation (5) qui est maintenue, pour la montée et la descente en particulier de son récipient d'évaporation (5), sur un chariot (21) qui est déplaçable latéralement sur la tour de guidage (3), ainsi qu'avec au moins une conduite de fluide qui est raccordée à la structure de verre (4), dans lequel la tour de guidage (3) présente un canal (17) orienté selon la dimension longitudinale de la tour (3), **caractérisé en ce que** la tour de guidage (3) est formée à cet effet d'au moins deux parties de profilé (22, 23) qui sont assemblées dans une couche de séparation orientée selon la dimension longitudinale de la tour de guidage (3), **en ce que** la tour de guidage (3) présente au moins une partie de profilé (22) qui est constituée par un profilé creux, et **en ce qu'**au moins un espace intérieur de profilé creux d'au moins une partie de profilé (22) forme le canal (17) de la tour de guidage (3), dans lequel il est prévu une partie de conduite d'au moins une conduite de fluide raccordée à la structure de verre (4), qui débouche ou se termine dans un raccord de tuyau flexible qui est disposé sur une région de l'évaporateur rotatif (1) située du côté du fond et à l'opposé de l'extrémité libre de la tour de guidage (3).

2. Évaporateur rotatif selon la revendication 1, **caractérisé en ce qu'**au moins une partie de conduite prévue dans la tour de guidage (3) est raccordée, à son extrémité de partie de conduite située à l'opposé de son premier raccord de fond de tuyau flexible, à un deuxième raccord de tuyau flexible, qui est disposé à la région d'extrémité libre de la tour de guidage (3).

3. Évaporateur rotatif selon la revendication 1 ou 2, **caractérisé en ce qu'**au moins une partie de conduite de ladite au moins une conduite de fluide prévue dans le canal (17) de la tour de guidage (3) est réalisée sous la forme d'une conduite flexible (18, 19, 20) menée dans le canal (17) et **en ce que** cette partie de conduite est raccordée à ses extrémités de conduite flexible au premier et éventuellement au deuxième raccord de tuyau flexible.

4. Évaporateur rotatif selon l'une quelconque des revendications 1 à 3, **caractérisé en ce qu'**au moins deux parties de profilé (22, 23) de la tour de guidage (3) entourent un espace creux (24), qui est configuré sous forme ouverte à une fente de guidage (25), **en ce qu'**il est prévu dans l'espace creux (24) un guidage de chariot (28), sur lequel le chariot (21) est guidé en déplacement, et **en ce que** le chariot (21) porte au moins un bras de liaison (33) traversant la fente de guidage (25) qui est relié à la structure de verre (4).

5. Évaporateur rotatif selon l'une quelconque des revendications 1 à 4, **caractérisé en ce que** la fente de guidage (25) est disposée dans la couche de séparation entre deux parties de profilé (22, 23) et est limitée par des bords étroits voisins (26, 27) de ces parties de profilé (22, 23).

6. Évaporateur rotatif selon l'une quelconque des revendications 1 à 5, **caractérisé en ce que** le chariot (21) peut être positionné au moyen d'une graduation (51), qui présente une échelle (52) prévue sur le pourtour extérieur de la tour de guidage (3), qui coopère avec une indication se trouvant sur le chariot (21).

7. Évaporateur rotatif selon l'une quelconque des revendications 1 à 6, **caractérisé en ce que** le chariot (21) est déplaçable depuis une position élevée contre une force de rappel dans une position abaissée et **en ce qu'**il est prévu, pour le déplacement du chariot (21), un treuil à câble (35) stationnaire par rapport à la tour de guidage (3), qui comporte au moins un câble enroulable (37) qui est maintenu ou guidé sur le chariot (21).

8. Évaporateur rotatif selon la revendication 7, **caractérisé en ce que** ledit au moins un câble (37) du treuil à câble (35) est guidé sur un palan (38).

9. Évaporateur rotatif selon la revendication 7 ou 8, **caractérisé en ce que** le treuil à câble (35) comporte un moteur d'entraînement, qui est monté sur ressorts ou avec amortissement des vibrations.

10. Évaporateur rotatif selon l'une quelconque des revendications 7 à 9, **caractérisé en ce que** le treuil à câble (35) comporte un moteur d'entraînement, qui est constitué par un moteur d'entraînement électrique sans couple dans un état sans courant.

11. Évaporateur rotatif selon l'une quelconque des revendications 7 à 10, **caractérisé en ce que** le treuil à câble (35) comporte un moteur d'entraînement, qui est constitué par un moteur pas à pas.

12. Évaporateur rotatif selon l'une quelconque des revendications 7 à 11, **caractérisé en ce qu'**il est prévu au moins un ressort à gaz comprimé (34) en tant que force de rappel.

13. Évaporateur rotatif selon la revendication 12, **caractérisé en ce que** ledit au moins un ressort à gaz (34) pousse le chariot (21) contre une butée de déplacement dans la position élevée.
